# EUROPEAN PATENT APPLICATION

(11) **EP 4 447 530 A1**
(43) Date of publication of application: **16.10.2024**
(21) Application number: 22903333.7
(22) Date of filing: 02.12.2022
(51) Int. Cl.: H04W 24/06

(54) **MEASUREMENT METHOD AND APPARATUS, DEVICE, AND STORAGE MEDIUM**

(30) Priority: 06.12.2021 CN 202111481447
(71) Applicant: VIVO MOBILE COMMUNICATION CO., LTD., Dongguan, Guangdong 523863 (CN)
(72) Inventor: JIA, Chenglu, Dongguan, Guangdong 523863 (CN); SUN, Peng, Dongguan, Guangdong 523863 (CN); YANG, Ang, Dongguan, Guangdong 523863 (CN); WANG, Yuanyuan, Dongguan, Guangdong 523863 (CN)
(74) Representative: Lavoix
(86) International application number: PCT/CN2022/136277
(87) International publication number: WO 2023/103911

(57) **Abstract**

This application discloses a measurement method and apparatus, a device, and a storage medium, pertaining to the field of communication. The measurement method in embodiments of this application includes: determining, by a first communication device, measurement information required for target measurement for performance indication information; performing, by the first communication device, target measurement based on the measurement information by using a target artificial intelligence model, to obtain a target measurement result of the target measurement; and transmitting, by the first communication device, first information to a second communication device; where the first information includes the target measurement result.

## Description

### CROSS-REFERENCE TO RELATED APPLICATIONS

This application claims priority to Chinese Patent Application No. 202111481447.1, filed on December 06, 2021, and entitled "MEASUREMENT METHOD AND APPARATUS, DEVICE, AND STORAGE MEDIUM", which is incorporated herein by reference in its entirety.

### TECHNICAL FIELD

This application pertains to the field of communication technologies, and specifically, relates to a measurement method and apparatus, a device, and a storage medium.

### BACKGROUND

For artificial intelligence (Artificial Intelligence, AI) applied to wireless communication, it is necessary to deploy AI models in network entities, and the network entities need to monitor prediction performance indicators of AI models running in terminals or network nodes to guarantee the communication quality of service.

However, at present, there is no effective way to monitor the prediction performance indicators of AI models, and the quality of communication service cannot be guaranteed.

### SUMMARY

Embodiments of the application provide a measurement method and apparatus, a device, and a storage medium, which can solve the problems that there is no effective way to monitor the prediction performance indicators of AI models and the quality of communication service cannot be guaranteed.

According to a first aspect, a measurement method is provided, where the method includes:
determining, by a first communication device, measurement information required for target measurement for performance indication information;
performing, by the first communication device, target measurement based on the measurement information by using a target artificial intelligence model, to obtain a target measurement result of the target measurement; and
transmitting, by the first communication device, first information to a second communication device; where
the first information includes the target measurement result.

According to a second aspect, a measurement method is provided, where the method includes:
indicating, by a third communication device, to a first communication device, measurement information required for target measurement for performance indication information.

According to a third aspect, a measurement method is provided, where the method includes:
receiving, by a second communication device, first information transmitted by a first communication device after the first communication device performs target measurement for performance indication information based on measurement information by using a target artificial intelligence model; where
the first information includes a target measurement result of the target measurement.

According to a fourth aspect, a measurement apparatus is provided, including:
a first determining module, configured to determine measurement information required for target measurement for performance indication information;
a performing module, configured to perform target measurement based on the measurement information by using a target artificial intelligence model, to obtain a target measurement result of the target measurement; and
a transmitting module, configured to transmit first information to a second communication device; where
the first information includes the target measurement result.

According to a fifth aspect, a measurement apparatus is provided, including:
an indicating module, configured to indicate, to a first communication device, measurement information required for target measurement for performance indication information.

According to a sixth aspect, a measurement apparatus is provided, including:
a receiving module, configured to receive first information transmitted by a first communication device after the first communication device performs target measurement for performance indication information based on measurement information by using a target artificial intelligence model; where
the first information includes a target measurement result of the target measurement.

According to a seventh aspect, a first communication device is provided, where the first communication device includes a processor, a memory, and a program or instructions stored in the memory and executable on the processor, and when the program or the instructions are executed by the processor, the steps of the method according to the first aspect are implemented.

According to an eighth aspect, a third communication device is provided, where the third communication device includes a processor and a memory, and a program or instructions executable on the processor are stored in the memory. When the program or the instructions are executed by the processor, the steps of the method according to the second aspect are implemented.

According to a ninth aspect, a second communication device is provided, where the second communication device includes a processor and a memory, and a program or instructions executable on the processor are stored in the memory. When the program or the instructions are executed by the processor, the steps of the method according to the third aspect are implemented.

According to a tenth aspect, a first communication device is provided, including a processor and a communication interface, where the processor is configured to:
determine measurement information required for target measurement for performance indication information; and
perform target measurement based on the measurement information by using a target artificial intelligence model, to obtain a target measurement result of the target measurement; and
the communication interface is configured to:
   transmit first information to a second communication device; where
   the first information includes the target measurement result.

According to an eleventh aspect, a third communication device is provided, including a processor and a communication interface, where the communication interface is configured to:
indicate, to a first communication device, measurement information required for target measurement for performance indication information.

According to a twelfth aspect, a second communication device is provided, including a processor and a communication interface, where the communication interface is configured to:
receive first information transmitted by a first communication device after the first communication device performs target measurement for performance indication information based on measurement information by using a target artificial intelligence model; where
the first information includes a target measurement result of the target measurement.

According to a thirteenth aspect, a measurement system is provided, including a first communication device, a second communication device, and a third communication device, where the first communication device can be configured to execute the steps of the foregoing measurement method according to the first aspect, the third communication device can be configured to execute the steps of the foregoing measurement method according to the second aspect, and the second communication device can be configured to execute the steps of the foregoing measurement method according to the third aspect.

According to a fourteenth aspect, a readable storage medium is provided, where a program or instructions are stored in the readable storage medium; and when the program or the instructions are executed by a processor, the steps of the measurement method according to the first aspect are implemented, or the steps of the measurement method according to the second aspect are implemented, or the steps of the measurement method according to the third aspect are implemented.

According to a fifteenth aspect, a chip is provided, where the chip includes a processor and a communication interface, the communication interface is coupled to the processor, and the processor is configured to run a program or instructions to implement the steps of the measurement method according to the first aspect, or the steps of the measurement method according to the second aspect, or the steps of the measurement method according to the third aspect.

According to a sixteenth aspect, a computer program/program product is provided, where the computer program/program product is stored in a storage medium, and the computer program/program product is executed by at least one processor to implement the steps of the measurement method according to the first aspect, or the steps of the measurement method according to the second aspect, or the steps of the measurement method according to the third aspect.

In the embodiments, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

### BRIEF DESCRIPTION OF DRAWINGS

FIG. 1 is a block diagram of a wireless communication system to which the embodiments of this application are applicable;
FIG. 2 is a schematic diagram of a neural network according to an embodiment of this application;
FIG. 3 is a schematic diagram of a neuron according to an embodiment of this application;
FIG. 4 is a first schematic flowchart of a measurement method according to an embodiment of this application;
FIG. 5 is a second schematic flowchart of a measurement method according to an embodiment of this application;
FIG. 6 is a third schematic flowchart of a measurement method according to an embodiment of this application;
FIG. 7 is a first schematic structural diagram of a measurement apparatus according to an embodiment of this application;
FIG. 8 is a second schematic structural diagram of a measurement apparatus according to an embodiment of this application;
FIG. 9 is a third schematic structural diagram of a measurement apparatus according to an embodiment of this application;
FIG. 10 is a schematic structural diagram of a communication device according to an embodiment of this application;
FIG. 11 is a schematic diagram of a hardware structure of a first communication device for implementing the embodiments of this application;
FIG. 12 is a schematic diagram of a hardware structure of a third communication device for implementing the embodiments of this application; and
FIG. 13 is a schematic diagram of a hardware structure of a second communication device for implementing the embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "I" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

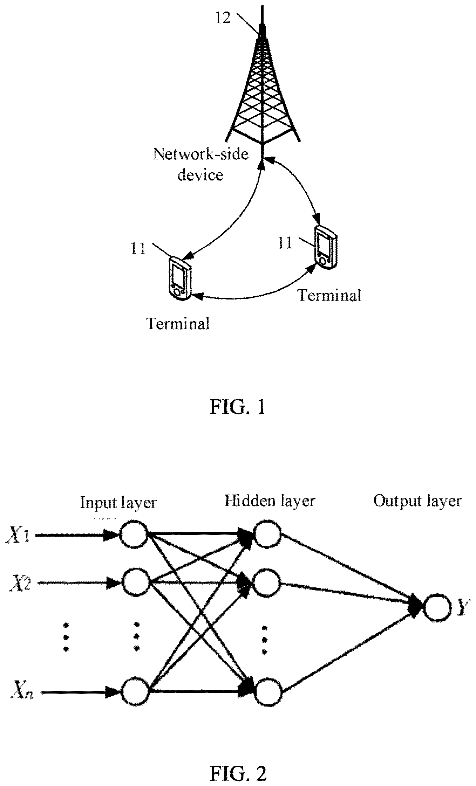

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point a Wi-Fi node, or the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration ( Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

The following content is first described:
Artificial intelligence (Artificial Intelligence, AI) has been widely applied in various fields at present. Integration of artificial intelligence into wireless communication networks to significantly improve technical indicators such as throughput, delay, and user capacity is an important task for future wireless communication networks. AI modules are implemented in a variety of manners, for example, neural network, decision tree, support vector machine, or Bayesian classifier. The following uses a neural network as an example for illustration, which, however, does not constitute any limitation on a specific type of the AI module.

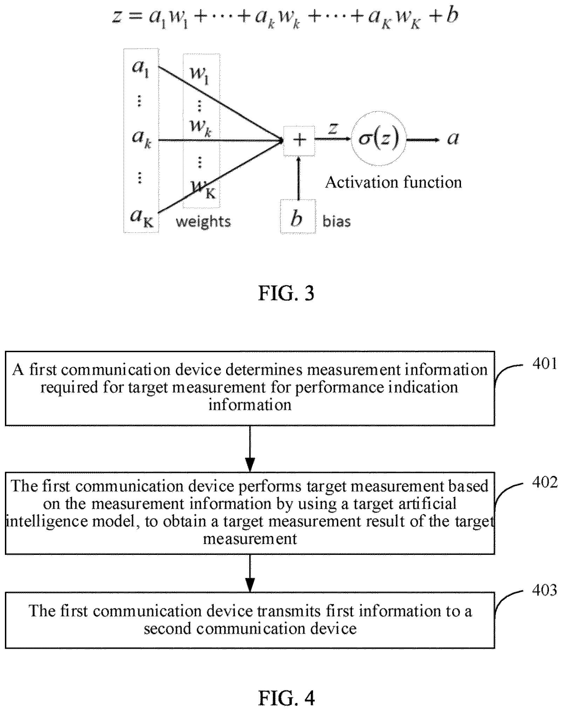

FIG. 2 is a schematic diagram of a neural network according to an embodiment of this application. FIG. 3 is a schematic diagram of a neuron according to an embodiment of this application. As shown in FIGs. 2 and 3, the neural network is composed of neurons, where a1, a2, ..., aK are inputs, w is a weight (multiplicative coefficient), b is an offset (additive coefficient), and σ(.) is an activation function. Common activation functions include Sigmoid, tanh, ReLU (Rectified Linear Unit, linear rectifier function, corrected linear unit), and so on.

Parameters of the neural network are optimized using a gradient optimization algorithm. The gradient optimization algorithm is an algorithm for minimizing or maximizing an objective function (sometimes referred to loss function), and the objective function is often a mathematical combination of model parameters and data. For example, given data X and its corresponding label Y, a neural network model f(.) may be constructed. After the model is constructed, a predicted output f(x) can be obtained based on an input x, and a difference (f(x)-Y) between a predicted value and a true value can be calculated, which is referred to as a loss function. Appropriate W,b may be found to minimize a value of the loss function. A smaller loss value indicates that the model is closer to reality.

Current common optimization algorithms are basically based on a BP (error Back Propagation, error back propagation) algorithm. The basic idea of the BP algorithm is that the learning process consists of two phases: forward propagation of signals and backward propagation of errors. During forward propagation, input samples are passed from an input layer through each hidden layer, and then to an output layer. If an actual output of the output layer does not match an expected output, the process enters the phase of error backward propagation. Error backward propagation involves propagating an output error back through the hidden layers to the input layer in some forms, and distributing the error among all units at each layer, to obtain error signals for the units at each layer. The error signals are then used as a basis for adjusting a weight of each unit. This process of signal forward propagation and error backward propagation for weight adjustment at all layers is repeated iteratively. The process of continuously adjusting weights is a learning and training process of the network. This process continues until an error in the network output is reduced to an acceptable level or until a pre-determined number of learning times is reached.

Common optimization algorithms include gradient descent (Gradient Descent), stochastic gradient descent (Stochastic Gradient Descent, SGD), mini-batch gradient descent (mini-batch Gradient Descent), momentum (Momentum), Nesterov (name of inventor, specifically stochastic gradient descent with momentum), Adagrad (ADAptive GRADient descent, adaptive gradient descent), Adadelta, RMSprop (root mean square prop, root mean square prop), Adam (Adaptive Moment Estimation, adaptive moment estimation), and the like.

During error backward propagation in the optimization algorithms, the error/loss is obtained based on the loss function, and a derivative/partial derivative of the current neuron is calculated, taking into account factors such as learning rate, previous gradients/derivatives/partial derivatives, to obtain the gradient, and then the gradient is passed to a previous layer.

With reference to the accompanying drawings, the following describes in detail, by using some embodiments and application scenarios thereof, a measurement method and apparatus, a device, and a storage medium provided in the embodiments of this application.

FIG. 4 is a first schematic flowchart of a measurement method according to an embodiment of this application. As shown in FIG. 4, the method includes the following steps.

Step 401: A first communication device determines measurement information required for target measurement for performance indication information.

Step 402: The first communication device performs target measurement based on the measurement information by using a target artificial intelligence model, to obtain a target measurement result of the target measurement.

Step 403: The first communication device transmits first information to a second communication device.

The first information includes the target measurement result.

Optionally, the first communication device may be a terminal deployed with an artificial intelligence model or a network node deployed with an artificial intelligence model.

Optionally, the second communication device may be a network-side device.

Optionally, the second communication device may be a network node different from the first communication device.

For example, the second communication device may be a core network node, including an NWDAF, an LMF, or the like.

For example, the second communication device may be a neural network processing node.

For example, the second communication device may be an access network node, such as a base station or a newly defined neural network processing node.

For example, there may be a plurality of second communication devices, which may be a combination of the foregoing nodes.

Specifically, exchange of performance indication information between the second communication device (such as a network entity) and the first communication device (such as a terminal or a network node) is beneficial for the second communication device to monitor the performance of the artificial intelligence model of the first communication device in real time, thus guaranteeing the communication quality of service in the communication system.

Therefore, the first communication device can use the target artificial intelligence model to perform the target measurement for the performance indication information, and transmit an obtained target measurement result to the second communication device, so that the second communication device can monitor the performance of the artificial intelligence model of the first communication device.

Optionally, before the first communication device performs the target measurement for the performance indication information, the first communication device may first determine the measurement information required for the target measurement for the performance indication information.

Optionally, after determining the measurement information, the first communication device may perform the target measurement based on the measurement information by using the target artificial intelligence model to obtain the target measurement result of the target measurement.

Optionally, after obtaining the target measurement result of the target measurement, the first communication device may report the target measurement result to the second communication device by using the first information.

Optionally, the target artificial intelligence model may be configured for the first communication device in advance by the second communication device, the third communication device, or other network-side devices.

Optionally, the target artificial intelligence model may be obtained through training by the first communication device itself.

Optionally, the third communication device may be a network-side device.

Optionally, the third communication device may be a network entity.

Optionally, the third communication device may be a network node.

Optionally, the third communication device may be a same communication device as the second communication device.

Optionally, the third communication device may be a communication device different from the second communication device.

For example, the third communication device may be a core network node, including a network data analytics function (Network Data Analytics Function, NWDAF), location management function (Location Management Function, LMF), or the like.

For example, the third communication device may be a neural network processing node.

For example, the third communication device may be an access network node, such as a base station or a newly defined neural network processing node.

For example, there may be a plurality of third communication devices, which may be a combination of the foregoing nodes.

In this embodiment, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

Optionally, the first information further includes the measurement information.

Specifically, the first communication device may alternatively report the measurement information to the second communication device through the first information, so that the second communication device can learn about related information used during the target measurement by using the target artificial intelligence model.

Optionally, the target measurement result and measurement information may be reported simultaneously.

Optionally, the target measurement result and measurement information may not be reported simultaneously.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

Optionally, the measurement information may include first indication information indicating a model type of the target artificial intelligence model.

Optionally, any information that can indicate the model type of the target artificial intelligence model may be used as the first indication information.

Optionally, the first indication information indicating the model type of the target artificial intelligence model may be directly the model type of the target artificial intelligence model.

Optionally, the first indication information indicating the model type of the target artificial intelligence model may be directly an identifier of the model type of the target artificial intelligence model.

Optionally, the measurement information may include second indication information indicating validity of the target artificial intelligence model.

Optionally, any information that can indicate validity of the target artificial intelligence model may be used as the second indication information.

Optionally, the second indication information indicating the validity of the target artificial intelligence model may be directly the validity of the target artificial intelligence model.

Optionally, the second indication information indicating the validity of the target artificial intelligence model may be directly an identifier of the validity of the target artificial intelligence model.

Optionally, the measurement information may include third indication information indicating at least one measurement object.

Optionally, any information that can indicate at least one measurement object may be used as the first indication information.

Optionally, the third indication information indicating at least one measurement object may be directly the at least one measurement object.

Optionally, the third indication information indicating at least one measurement object may be directly a respective identifier of the at least one measurement object.

Optionally, the measurement information may include fourth indication information indicating measurement timestamp information for the target measurement.

Optionally, any information that can indicate the measurement timestamp information for the target measurement may be used as the first indication information.

Optionally, the fourth indication information indicating the measurement timestamp information for the target measurement may be directly the measurement timestamp information for the target measurement.

Optionally, the fourth indication information indicating the measurement timestamp information for the target measurement may be directly an identifier of the measurement timestamp information for the target measurement.

Optionally, the measurement information may include fifth indication information indicating the performance indication information.

Optionally, any information that can indicate the performance indication information may be used as the fifth indication information.

Optionally, the fifth indication information indicating the performance indication information may be directly the performance indication information.

Optionally, the fifth indication information indicating the performance indication information may be directly an identifier of the performance indication information.

Optionally, the measurement information may further include sixth indication information indicating a measurement type of the target measurement.

Optionally, any information that can indicate the measurement type of the target measurement may be used as the sixth indication information.

Optionally, the sixth indication information indicating the measurement type of the target measurement may be directly the measurement type of the target measurement.

Optionally, the sixth indication information indicating the measurement type of the target measurement may be directly an identifier of the measurement type of the target measurement.

Optionally, the measurement information may further include seventh indication information indicating a quantization manner of the target measurement result.

Optionally, any information that can indicate the quantization manner of the target measurement result may be used as seventh indication information.

Optionally, the seventh indication information indicating the quantization manner of the target measurement result may be directly the quantization manner of the target measurement result.

Optionally, the seventh indication information indicating the quantization manner of the target measurement result may be directly an identifier of the quantization manner of the target measurement result.

Optionally, the target measurement includes measurement for the at least one measurement object.

For example, the target measurement for the performance indication information may be measurement on a mean square error. In this case, the target measurement may include measurement on a measurement object, where the measurement object may include channel state information, position information, beam information, or the like. Based on a measurement result of the measurement on the measurement object, the target measurement result of the target measurement for the target performance information is obtained.

Optionally, the model type of the target artificial intelligence model may include CNN, RNN, transformer, or the like, and may also include a specific model of the target artificial intelligence model. For example, a plurality of RNN models may be deployed, and a specific model of the target artificial intelligence model may be specifically a specific RNN model.

Optionally, that the first communication device determines the measurement information required for the target measurement for the performance indication information includes at least one of the following:
determining, by the first communication device, the measurement information based on an indication from a third communication device;
determining, by the first communication device, the measurement information based on a predefinition in a protocol;
determining, by the first communication device, the measurement information based on a preset setting; and
determining, by the first communication device, the measurement information based on default measurement information.

Optionally, that the first communication device determines the measurement information required for the target measurement for the performance indication information includes any one or more of the following determining manners (a) to (d):
(a) determining, by the first communication device, the measurement information based on an indication from a third communication device; or
(b) determining, by the first communication device, the measurement information based on a predefinition in a protocol; or
(c) determining, by the first communication device, the measurement information based on a preset setting; or
(d) determining, by the first communication device, the measurement information based on default measurement information.

Specifically, the first communication device may determine the measurement information based on an indication from a third communication device.

Optionally, the third communication device may be a network-side device.

Optionally, the third communication device may be a network entity.

Optionally, the third communication device may be a network node.

Optionally, the third communication device may be a same communication device as the second communication device.

Optionally, the third communication device may be a communication device different from the second communication device.

For example, the third communication device may be a core network node, including an NWDAF, an LMF, or the like.

For example, the third communication device may be a neural network processing node.

For example, the third communication device may be an access network node, such as a base station or a newly defined neural network processing node.

For example, there may be a plurality of third communication devices, which may be a combination of the foregoing nodes.

Optionally, the first communication device determines the measurement information based on a predefinition in a protocol.

Optionally, the first communication device determines the measurement information based on a preset setting.

Optionally, the first communication device determines the measurement information based on the default measurement information.

Optionally, when determining the measurement information, the first communication device may determine the measurement information using any one of the foregoing determining manners (a) to (d).

Optionally, when determining the measurement information, the first communication device may perform determining using a plurality of manners of the foregoing determining manners (a) to (d), where part of the measurement information is determined using each determining manner.

For example, the at least one measurement object, the measurement timestamp information for the target measurement, and the performance indication information may be determined based on the indication the third communication device; and the validity of the target artificial intelligence model and the model type of the target artificial intelligence model may be determined based on a preset setting.

For example, the measurement timestamp information for the target measurement may be determined based on the indication from the third communication device; and the performance indication information, the validity of the target artificial intelligence model, the model type of that target artificial intelligence model, and the at least one measurement object are determined based on a preset setting. For example, the model type of the target artificial intelligence model and the at least one measurement object may be determined based on the predefinition in the protocol; and the performance indication information, the measurement timestamp information of the target measurement and the validity of the target artificial intelligence model are determined based on a preset setting.

Optionally, priorities of the determining manners corresponding to (a) to (d) may alternatively be determined, and when the same measurement information is determined using two or more determining manners, specific measurement information may be determined based on the priorities.

For example, a priority order of the determining manners corresponding to (a) to (d) is (a) > (b) > (c) > (d), where a higher order indicates a higher corresponding priority. If the third communication device indicates that the model type of the target artificial intelligence model is CNN and the protocol predefines the model type of the target artificial intelligence model being RNN, the model type of the target artificial intelligence model may be determined as CNN because a priority of the determining manner corresponding to the indication from the third communication device is higher than a corresponding determining manner predefined by the protocol.

Optionally, that the first communication device determines measurement information required for target measurement for performance indication information includes:
determining, by the first communication device, a model type of the target artificial intelligence model; and
determining, by the first communication device, the at least one measurement object based on a first association relationship and the model type; where
the first association relationship indicates an association relationship between the at least one measurement object and the model type.

Optionally, the measurement object and the model type of the target artificial intelligence model may be associated.

Optionally, the first communication device may first determine the model type of the target artificial intelligence model, and then determine at least one measurement object associated with the model type.

Optionally, the association relationship between the model type and the measurement object may be a first association relationship, where the first association relationship may be preset, or indicated by the network-side device, or indicated by the third communication device, or predefined by the protocol, which is not limited in the embodiments of this application.

For example, the model type of the target artificial intelligence model may be an RNN model, and the measurement object may include CSI, that is, the target measurement may include CSI prediction.

Optionally, the target artificial intelligence model and the performance indication information may be associated. The association relationship between the target artificial intelligence model and the performance indication information may be a second association relationship, where the second association relationship may be preset, or indicated by the network-side device, or indicated by the third communication device, or predefined by the protocol, which is not limited in the embodiments of this application.

For example, if the target artificial intelligence model is an AI-based CSI estimation model, it is necessary to measure performance indication information of the AI-based CSI estimation model, and performance indication information associated with this model may be preset as a mean square error.

Optionally, there may be no preset association relationship between the target artificial intelligence model and the performance indication information, and after the target artificial intelligence model is determined, the performance indication information may be further determined based on the indication from the second communication device or the third communication device or the network-side device.

For example, if the target artificial intelligence model is an AI-based CSI estimation model, it is necessary to measure performance indication information of the AI-based CSI estimation model, and performance indication information associated with this model may be determined as a mean square error based on the indication from the second communication device or the third communication device or the network-side device.

Optionally, the measurement type includes at least one of the following:
periodic measurement, semi-periodic measurement, and aperiodic measurement.

Optionally, the measurement type may include any one or more of the following:
periodic measurement, or semi-periodic measurement, or aperiodic measurement.

Optionally, in a case that the measurement type includes the periodic measurement, the measurement timestamp information includes a first measurement period corresponding to the target measurement.

Optionally, if the measurement type of the target measurement is periodic measurement, the measurement timestamp information may include the first measurement period corresponding to the target measurement.

Optionally, the first communication device may periodically perform the target measurement based on the first measurement period, for example, a measurement window runs once every 10ms.

Optionally, in a case that the measurement type includes the semi-periodic measurement or the aperiodic measurement, the measurement timestamp information includes: a first absolute time corresponding to the target measurement and/or a first relative time relative to a first reference time corresponding to the target measurement; where
the first reference time includes at least one of the following:
time at which the measurement information is determined by the first communication device;
an n-th time unit that is after the time at which the measurement information is indicated by the third communication device, where n is a positive integer;
an m-th time unit in a first measurement period and/or second measurement period, where the first measurement period and/or the second measurement period are reporting periods corresponding to the first information transmitted by the first communication device to the second communication device, and m is a positive integer;
measurement time of historical measurement;
reporting time of measurement information and a reporting time of a measurement result of the historical measurement; and
first relative time of a historical reference signal corresponding to the historical measurement.

Optionally, in a case that the measurement type includes the semi-periodic measurement or the aperiodic measurement, the measurement timestamp information may include: a first absolute time corresponding to the target measurement.

Optionally, in a case that the measurement type includes the semi-periodic measurement or the aperiodic measurement, the measurement timestamp information may include: a first relative time corresponding to the target measurement.

Optionally, the first relative time may include a first relative time relative to a first reference time.

Optionally, the first reference information may include any one or more of the following:
time at which the measurement information is determined by the first communication device; for example, the first communication device may perform measurement in a specific time unit after receiving an indication of the measurement type; or
an n-th time unit that is after the time at which the measurement information is indicated by the third communication device, where n is a positive integer; for example, the first communication device may perform measurement in the n-th time unit following indication of the measurement type by the third communication device; or
measurement time of historical measurement; where for example, the first communication device may perform measurement at a moment after a first preset time period relative to a measurement time of a specific historical measurement; or
reporting time of measurement information and a reporting time of a measurement result of the historical measurement, where for example, the first communication device may perform measurement at a moment after a second preset time period relative to a reporting time of a measurement result of a specific historical measurement; or
first relative time of a historical reference signal corresponding to the historical measurement, where for example, the first communication device may perform measurement at a moment after a third preset time period relative to a transmission time of a specific historical reference signal.

Optionally, a time unit of the first absolute time corresponding to the target measurement and/or the first relative time relative to the first reference time corresponding to the target measurement may include a common communication time unit such as TTI, symbol, slot, frame, subframe, radio frame, second, minute, hour, day, or month.

Optionally, the time unit may include reference signal period, prediction period, time unit, half time unit, symbol (OFDM symbol), subframe, radio frame, millisecond, second, or the like.

Optionally, the measurement timestamp information includes a training period of the target artificial intelligence model.

Optionally, the measurement timestamp information further includes a training period of the target artificial intelligence model, so as to indicate the first communication device to train the target artificial intelligence model based on the training period.

The training period may include relative period and/or absolute period.

For example, when the training period includes a relative period, it may indicate training of E epochs in a case of a batch size being B.

For example, when the training period includes an absolute period, it may indicate training of S time units, or F frames, and so on.

Optionally, that the first communication device performs the target measurement based on the measurement information by using the target artificial intelligence model includes at least one of the following:
performing the target measurement based on a first measurement period of the periodic measurement in a case that the measurement type includes periodic measurement;
performing the target measurement based on error measurement window information of the periodic measurement in a case that the measurement type includes periodic measurement; where the error measurement window information includes a start/end time position of a window and/or duration information of the window;
performing the target measurement based on a second measurement period of the semi-periodic measurement in a case that the measurement type includes semi-periodic measurement;
performing the target measurement based on a burst measurement indication in a case that the measurement type includes semi-periodic measurement or aperiodic measurement; and
proactively performing, by the first communication device, the target measurement in a case that a reporting manner includes semi-periodic reporting or aperiodic reporting.

Optionally, in a case that the measurement type includes periodic measurement, the first communication device performs the target measurement based on the measurement information by using the target artificial intelligence model, which may specifically include: performing the target measurement based on the first measurement period of the periodic measurement.

Optionally, in a case that the measurement type includes periodic measurement, the first communication device performs the target measurement based on the measurement information by using the target artificial intelligence model, which may specifically include: performing the target measurement based on error measurement window information of the periodic measurement; where the error measurement window information includes a start/end time position of a window and/or duration information of the window.

Optionally, in a case that the measurement type includes semi-periodic measurement, the first communication device performs the target measurement based on the measurement information by using the target artificial intelligence model, which may specifically include: performing the target measurement based on the second measurement period of the semi-periodic measurement.

Optionally, in a case that the measurement type includes semi-periodic measurement or aperiodic measurement, the first communication device performs the target measurement based on the measurement information by using the target artificial intelligence model, which may specifically include: performing the target measurement based on a burst measurement indication.

Optionally, in a case that the reporting manner includes semi-periodic reporting or aperiodic reporting, the first communication device performs the target measurement based on the measurement information by using the target artificial intelligence model, which may specifically include: the first communication device proactively performs the target measurement.

Optionally, the periodic measurement may include that the first communication device periodically triggers the target measurement based on the first measurement period, such as performing measurement once every 10ms.

Optionally, the semi-periodic reporting may include that the first communication device periodically triggers the target measurement based on the second measurement period, or may perform the target measurement upon receiving a burst measurement indication and/or triggering active measurement.

Optionally, the aperiodic reporting may include that the first communication device does not periodically perform measurement.

Optionally, the aperiodic reporting may include that the first communication device may perform target measurement upon receiving a burst measurement indication and/or triggering active measurement.

Optionally, that the first communication device determines the measurement information based on the indication from the third communication device includes:
in a case that the indication from the third communication device includes periodic-measurement trigger information, determining that the measurement type includes the periodic measurement; where
the periodic-measurement trigger information includes at least one of the following:
   first measurement type indication information, where the first measurement type indication information directly indicates that the measurement type includes the periodic measurement;
   error measurement window information of the periodic measurement; and
   the first measurement period of the periodic measurement.

Optionally, the first communication device may receive an indication from the third communication device. Using a manner of indicating periodic-measurement trigger information, the third communication device may indicate to the first communication device that the measurement type includes the periodic measurement.

Specifically, the periodic-measurement trigger information includes one or more of the following:
first measurement type indication information, where the first measurement type indication information directly indicates that the measurement type includes the periodic measurement; or
error measurement window information of the periodic measurement; or
the first measurement period of the periodic measurement.

Optionally, the first communication device may receive an indication from the third communication device. Using a manner of indicating first measurement type indication information, the third communication device may directly indicate to the first communication device that the measurement type includes the periodic measurement.

Optionally, the first communication device may receive an indication from the third communication device. Using a manner of indicating the error measurement window information of the periodic measurement, the third communication device may indicate to the first communication device that the measurement type includes the periodic measurement. When determining that the measurement type includes the periodic measurement, the first communication device may learn about the error measurement window of the periodic measurement.

Optionally, the first communication device may receive an indication from the third communication device. Using a manner of indicating the first measurement period of the periodic measurement, the third communication device may indicate to the first communication device that the measurement type includes the periodic measurement. When determining that the measurement type includes the periodic measurement, the first communication device may learn about the first measurement period.

Optionally, that the first communication device determines the measurement information based on the indication from the third communication device includes:
in a case that the indication from the third communication device includes semi-periodic-measurement trigger information, determining that the measurement type includes the semi-periodic measurement; where
the semi-periodic-measurement trigger information includes at least one of the following:
   second measurement type indication information, where the second measurement type indication information directly indicates that the measurement type includes the semi-periodic measurement;
   the second measurement period of the semi-periodic measurement; and
   a burst measurement indication.

Optionally, the first communication device may receive an indication from the third communication device. Using a manner of indicating semi-periodic-measurement trigger information, the third communication device may indicate to the first communication device that the measurement type includes the semi-periodic measurement.

Specifically, the semi-periodic-measurement trigger information includes one or more of the following:
second measurement type indication information, where the second measurement type indication information directly indicates that the measurement type includes the semi-periodic measurement; or
the second measurement period of the semi-periodic measurement; or
a burst measurement indication.

Optionally, the first communication device may receive an indication from the third communication device. Using a manner of indicating the second measurement type indication information, the third communication device may indicate to the first communication device that the measurement type includes the semi-periodic measurement.

Optionally, the first communication device may receive an indication from the third communication device. Using a manner of indicating the second measurement period of the semi-periodic measurement, the third communication device may indicate to the first communication device that the measurement type includes the semi-periodic measurement. When determining that the measurement type includes the semi-periodic measurement, the first communication device may learn about the second measurement period.

Optionally, the first communication device may receive an indication from the third communication device. Using a manner of indicating the burst measurement indication, the third communication device may indicate to the first communication device that the measurement type includes the semi-periodic measurement. When determining that the measurement type includes the semi-periodic measurement, the first communication device may learn about burst measurement to be performed.

Optionally, the semi-periodic measurement may be also performing burst measurement based on the received burst measurement indication when the measurement is performed based on the second measurement period.

Optionally, the burst measurement indication may include a bit part indicating that the measurement type includes the semi-periodic measurement.

Optionally, the burst measurement indication may not include any content indicating that the measurement type includes the semi-periodic measurement. In this case, the first communication device needs to first or simultaneously receive the second measurement type indication information and/or the second measurement period of the semi-periodic measurement, so as to determine that the measurement type includes the aperiodic measurement.

Optionally, that the first communication device determines the measurement information based on the indication from the third communication device includes:
in a case that the indication from the third communication device includes aperiodic-measurement trigger information, determining that the measurement type in the measurement information includes the aperiodic measurement.

The aperiodic-measurement trigger information includes at least one of the following:
third measurement type indication information, where the third measurement type indication information directly indicates that the measurement type includes the aperiodic measurement; and
a burst measurement indication.

Optionally, the first communication device may receive an indication from the third communication device. Using a manner of indicating aperiodic-measurement trigger information, the third communication device may indicate to the first communication device that the measurement type includes the aperiodic measurement.

Specifically, the aperiodic-measurement trigger information includes one or more of the following:
third measurement type indication information, where the third measurement type indication information directly indicates that the measurement type includes the aperiodic measurement; or
a burst measurement indication.

Optionally, the first communication device may receive an indication from the third communication device. Using a manner of indicating the third measurement type indication information, the third communication device may indicate to the first communication device that the measurement type includes the aperiodic measurement.

Optionally, the first communication device may receive an indication from the third communication device. Using a manner of indicating the burst measurement indication, the third communication device may indicate to the first communication device that the measurement type includes the aperiodic measurement. When determining that the measurement type includes the aperiodic measurement, the first communication device may learn about burst measurement to be performed.

Optionally, the aperiodic measurement may be that the first communication device does not perform periodic target measurement.

Optionally, the burst measurement indication may include a bit part indicating that the measurement type includes the aperiodic measurement.

Optionally, the burst measurement indication may not include any content indicating that the measurement type includes the aperiodic measurement. In this case, the first communication device needs to first or simultaneously receive the third measurement type indication information, so as to determine that the measurement type includes the aperiodic measurement.

Optionally, that the first communication device determines the measurement information required for the target measurement for the performance indication information includes at least one of the following:
determining that the target measurement includes instantaneous measurement, in a case that the first communication device determines that the performance indication information includes instantaneous performance indication information; and
determining that the target measurement includes statistical measurement, in a case that the first communication device determines that the performance indication information includes performance indication information obtained statistically for a plurality of continuous measurement time points or a plurality of continuous measurement positions.

Optionally, the performance indication information may include instantaneous performance indication information.

Optionally, the instantaneous performance indication information may be performance indication information for one or several predefined measurement time points or measurement positions.

Optionally, the performance indication information may include performance indication information obtained statistically for a plurality of continuous measurement time points or a plurality of continuous measurement positions.

Optionally, the performance indication information may include instantaneous performance indication information and performance indication information obtained statistically for a plurality of continuous measurement time points or a plurality of continuous measurement positions.

Optionally, in a case that the performance indication information includes instantaneous performance indication information, the target measurement includes instantaneous measurement for one or several predefined measurement time points or measurement positions.

Optionally, in a case that the performance indication information includes the performance indication information obtained statistically for a plurality of continuous measurement time points or a plurality of continuous measurement positions, the target measurement includes measurement and statistics for the plurality of continuous measurement time points or a plurality of continuous measurement positions.

Optionally, the first communication device may determine, based on the type of the performance indication information, that the target measurement is instantaneous measurement or statistical measurement.

Optionally, the first communication device may determine, based on a measurement criterion obtained along with the performance indication information, that the target measurement is instantaneous measurement or statistical measurement.

Optionally, the first communication device may determine, based on a measurement criterion of a preset value, that the target measurement is instantaneous measurement or statistical measurement.

Optionally, the first communication device may determine, based on a measurement criterion predefined by the protocol, that the target measurement is instantaneous measurement or statistical measurement.

Optionally, the instantaneous performance indication information includes at least one of the following:
model instantaneous error, distance performance instantaneous indicator, and communication performance instantaneous indicator; where the target measurement result includes an instantaneous result of the instantaneous measurement; and
the performance indication information obtained statistically for the plurality of continuous measurement time points or the plurality of continuous measurement positions includes at least one of the following:
   model statistical error, distance performance statistical indicator, and communication performance statistical indicator; where the target measurement result includes a statistical result of the statistical measurement.

Optionally, the instantaneous performance indication information may include the following two types of (e) and (f):
(e) First type: model instantaneous error, for example, a model-related performance indicator such as cross entropy, mean square error (MSE), or mean absolute error (MAE); and distance performance instantaneous indicator, for example, a distance performance indicator such as cosine distance.
(f) Second type: communication performance instantaneous indicator, such as instantaneous SNR, SINR, packet error rate, interruption probability, or cell/beam switching probability.

Optionally, the performance indication information obtained statistically for the plurality of continuous measurement time points or the plurality of continuous measurement positions may include the following two types of (g) and (h):
(g) Third type: model statistical error, such as cross entropy, mean square error (MSE), and mean absolute error (MAE); and distance performance statistical indicator, for example, a statistical value of a performance indicator such as cosine distance, such as mean, variance, or 90% CDF.
(h) Fourth type: communication performance statistical indicator, for example a statistical value of a communication performance indicator such as SNR, SINR, packet error rate, interruption probability, or cell/beam switching probability, for example, mean, variance, or 90% CDF.

Optionally, in a case that the performance indication information includes instantaneous performance indication information, the target measurement result includes an instantaneous result of instantaneous measurement.

Optionally, in the case that the performance indication information includes the performance indication information obtained statistically for the plurality of continuous measurement time points or the plurality of continuous measurement positions, the target measurement result includes a statistical result of the statistical measurement.

Optionally, the quantization manner includes at least one of the following:
a number of accurate digits for error quantization of the target measurement result; and
an error level of the target measurement result.

Optionally, the quantization manner may include at least one of the following:
a number of accurate digits for error quantization of the target measurement result; for example, if the measurement error is accurate to tenth digit, 10.11 is quantized to 10.1; or
an error level of the target measurement result, such as a channel estimation error being less than -30dB is one level, -30dB to -20dB is one level, and so on.

Optionally, that the first communication device transmits the first information to the second communication device includes:
the first communication device determines a reporting manner; and
the first communication device transmits the first information to the second communication device based on the reporting manner and the reporting timestamp information; where
the reporting manner includes:
   periodic reporting;
   semi-periodic reporting; and
   aperiodic reporting.

Optionally, the first communication device may first determine the reporting manner, and then transmit the first information to the second communication device based on the reporting manner.

Optionally, the reporting manner may include any one or more of the following:
periodic reporting; or
semi-periodic reporting; or
aperiodic reporting.

Optionally, in a case that the reporting manner includes periodic reporting, the first communication device may periodically transmit the first information to the second communication device.

Optionally, in a case that the reporting manner includes semi-periodic reporting, the first communication device may semi-periodically transmit the first information to the second communication device.

Optionally, in a case that the reporting manner includes aperiodic reporting, the first communication device may aperiodically transmit the first information to the second communication device.

Optionally, that the first communication device transmits the first information to the second communication device based on the reporting manner and the reporting timestamp information includes at least one of the following:
in a case that the reporting manner includes periodic reporting, transmitting the first information to the second communication device based on a first reporting period of the periodic reporting;
in a case that the reporting manner includes semi-periodic reporting, transmitting the first information to the second communication device based on a second reporting period of the semi-periodic reporting;
in a case that the reporting manner includes semi-periodic reporting or aperiodic reporting, transmitting the first information to the second communication device based on a burst reporting indication; and
in a case that the reporting manner includes semi-periodic reporting or aperiodic reporting, proactively transmitting, by the first communication device, the first information to the second communication device.

Optionally, in the case that the reporting manner includes periodic reporting, the first communication device transmits the first information to the second communication device based on the reporting manner and the reporting timestamp information, which may specifically include: transmitting the first information to the second communication device based on the first reporting period of the periodic reporting.

Optionally, in the case that the reporting manner includes semi-periodic reporting, the first communication device transmits the first information to the second communication device based on the reporting manner and the reporting timestamp information, which may specifically include: transmitting the first information to the second communication device based on the second reporting period of the semi-periodic reporting.

Optionally, in the case that the reporting manner includes semi-periodic reporting or aperiodic reporting, the first communication device transmits the first information to the second communication device based on the reporting manner and the reporting timestamp information, which may specifically include: transmitting the first information to the second communication device based on a burst reporting indication.

Optionally, in the case that the reporting manner includes semi-periodic reporting or aperiodic reporting, the first communication device transmits the first information to the second communication device based on the reporting manner and the reporting timestamp information, which may specifically include: proactively transmitting, by the first communication device, the first information to the second communication device.

Optionally, the periodic reporting may include that the first communication device periodically triggers reporting of the first information based on the first reporting period, such as performing reporting once every 10ms.

Optionally, the semi-periodic reporting may include that the first communication device periodically triggers reporting of the first information based on the second reporting period, or may perform the reporting of the first information upon receiving a burst reporting indication and/or triggering active reporting.

Optionally, the aperiodic reporting may include that the first communication device does not periodically perform reporting.

Optionally, the aperiodic reporting may include that the first communication device may perform reporting of the first information upon receiving a burst reporting indication and/or triggering active reporting.

Optionally, that the first communication device proactively transmits the first information to the second communication device includes:
in a case that the target measurement result is greater than a first threshold, proactively transmitting, by the first communication device, the first information to the second communication device; where
the first threshold is preset or predefined by a protocol or indicated by the third communication device.

Optionally, the terminal may proactively report the first information to the second communication device in a case that the target measurement result is greater than a first threshold.

Optionally, the first threshold is preset or predefined by a protocol or indicated by the third communication device.

Optionally, that the first communication device determines the reporting manner includes at least one of the following:
determining, by the first communication device, the reporting manner based on an indication from the third communication device;
determining, by the first communication device, the reporting manner based on a predefinition in a protocol;
determining, by the first communication device, the reporting manner based on a preset setting; and
determining, by the first communication device, the reporting manner of the first information based on a default reporting manner.

Optionally, that the first communication device determines the measurement information required for the target measurement for the performance indication information includes any one or more of the following determining manners (i) to (l):
(i) determining, by the first communication device, the reporting manner based on an indication from the third communication device; or
(j) determining, by the first communication device, the reporting manner based on a predefinition in a protocol; or
(k) determining, by the first communication device, the reporting manner based on a preset setting; or
(l) determining, by the first communication device, the reporting manner of the first information based on a default reporting manner.

Specifically, the first communication device may determine the reporting manner based on an indication from the third communication device.

Optionally, the third communication device may be a network-side device.

Optionally, the third communication device may be a network entity.

Optionally, the third communication device may be a network node.

Optionally, the third communication device may be a same communication device as the second communication device.

Optionally, the third communication device may be a communication device different from the second communication device.

Optionally, the first communication device may determine the reporting manner based on a predefinition in a protocol.

Optionally, the first communication device may determine the reporting manner based on a preset setting.

Optionally, the first communication device may determine the reporting manner of the first information based on a default reporting manner.

Optionally, when determining the reporting manner, the first communication device may determine it in any one of the foregoing determining manners (i) to (l).

Optionally, when determining the reporting manner, the first communication device can use any one of the foregoing determining manners (i) to (l), where the priorities of the determining manners corresponding to (i) to (l) may be determined, and when the same measurement information is determined using two or more determining manners, specific measurement information may be determined based on the priorities.

For example, a priority order of the determining manners corresponding to (i) to (l) is (i) < (j) < (k) < (1), a higher order indicates a higher corresponding priority. If the third communication device indicates that the reporting manner is periodic reporting and the protocol predefines that the reporting manner is aperiodic reporting, the reporting manner may be determined to be aperiodic reporting because the priority of the determining manner corresponding to the indication from the third communication device is lower than a corresponding determining manner predefined by the protocol.

Optionally, that the first communication device determines the reporting manner based on the indication from the third communication device includes:
in a case that the indication from the third communication device includes periodic-reporting trigger information, determining that the reporting manner includes the periodic reporting, where
the periodic-reporting trigger information includes at least one of the following:
   first reporting manner indication information, where the first reporting manner indication information directly indicates that the reporting manner includes the periodic reporting; and
   a first reporting period of the periodic reporting.

Optionally, the first communication device may receive an indication from the third communication device. Using a manner of indicating periodic-reporting trigger information, the third communication device may indicate to the first communication device that the reporting manner includes the periodic reporting.

Specifically, the periodic-reporting trigger information includes at least one of the following:
first reporting manner indication information, where the first reporting manner indication information directly indicates that the reporting manner includes the periodic reporting; or
a first reporting period of the periodic reporting.

Optionally, the first communication device may receive an indication from the third communication device. Using a manner of indicating the first reporting manner indication information, the third communication device may indicate to the first communication device that the reporting manner includes the periodic reporting.

Optionally, the first communication device may receive an indication from the third communication device. Using a manner of indicating the first reporting period of the periodic reporting, the third communication device may indicate to the first communication device that the reporting manner includes the periodic reporting. When determining that the reporting manner includes the periodic reporting, the first communication device may learn about the first reporting period.

Optionally, that the first communication device determines the reporting manner based on the indication from the third communication device includes:
in a case that the indication from the third communication device includes semi-periodic-reporting trigger information, determining that the reporting manner includes the semi-periodic reporting, where
the semi-periodic-reporting trigger information includes at least one of the following:
   second reporting manner indication information, where the second reporting manner indication information indicates that the reporting manner includes the semi-periodic reporting;
   a second reporting period of the semi-periodic reporting; and
   a burst reporting indication.

Optionally, the first communication device may receive an indication from the third communication device. Using a manner of indicating semi-periodic-reporting trigger information, the third communication device may indicate to the first communication device that the reporting manner includes the semi-periodic reporting.

Specifically, the semi-periodic-reporting trigger information includes at least one of the following:
second reporting manner indication information, where the second reporting manner indication information indicates that the reporting manner includes the semi-periodic reporting; or
a second reporting period of the semi-periodic reporting; or
a burst reporting indication.

Optionally, the first communication device may receive an indication from the third communication device. Using a manner of indicating the second reporting manner indication information, the third communication device may indicate to the first communication device that the reporting manner includes the semi-periodic reporting.

Optionally, the first communication device may receive an indication from the third communication device. Using a manner of indicating the second reporting period of the semi-periodic reporting, the third communication device may indicate to the first communication device that the reporting manner includes the semi-periodic reporting. When determining that the reporting manner includes the semi-periodic reporting, the first communication device may learn about the second reporting period.

Optionally, the first communication device may receive an indication from the third communication device. Using a manner of indicating the burst reporting indication, the third communication device may indicate to the first communication device that the reporting manner includes the semi-periodic reporting. When determining that the reporting manner includes the semi-periodic reporting, the first communication device may learn about burst reporting to be performed.

Optionally, the burst reporting indication may include a bit part indicating that the reporting manner includes the semi-periodic reporting.

Optionally, the burst reporting indication may not include any content indicating that the reporting manner includes semi-periodic reporting. In this case, the first communication device needs to first receive the second reporting manner indication information and/or the second reporting period of the semi-periodic reporting, so as to determine that the reporting manner includes semi-periodic reporting.

Optionally, that the first communication device determines the reporting manner based on the indication from the third communication device includes:
in a case that the indication from the third communication device includes aperiodic-reporting trigger information, determining that the reporting manner includes the aperiodic reporting, where
the semi-periodic-reporting trigger information includes at least one of the following:
   third reporting manner indication information, where the third reporting manner indication information directly indicates that the reporting manner includes the aperiodic reporting; and
   a burst reporting indication.

Optionally, the first communication device may receive an indication from the third communication device. Using a manner of indicating aperiodic-reporting trigger information, the third communication device may indicate to the first communication device that the reporting manner includes the aperiodic reporting.

Specifically, the aperiodic-reporting trigger information includes at least one of the following:
third reporting manner indication information, where the third reporting manner indication information directly indicates that the reporting manner includes the aperiodic reporting; or
a burst reporting indication.

Optionally, the first communication device may receive an indication from the third communication device. Using a manner of indicating the third reporting manner indication information, the third communication device may indicate to the first communication device that the reporting manner includes the aperiodic reporting.

Optionally, the first communication device may receive an indication from the third communication device. Using a manner of indicating the burst reporting indication, the third communication device may indicate to the first communication device that the reporting manner includes the aperiodic reporting. When determining that the reporting manner includes the aperiodic reporting, the first communication device may learn about burst reporting to be performed.

Optionally, the burst reporting indication may include a bit part indicating that the reporting manner includes the aperiodic reporting.

Optionally, the burst reporting indication may not include any content indicating that the reporting manner includes aperiodic reporting. In this case, the first communication device needs to first receive the second reporting manner indication information and/or the second reporting period of the semi-periodic reporting, so as to determine that the reporting manner includes aperiodic reporting.

Optionally, in a case that the reporting manner includes the semi-periodic reporting and/or in a case that the reporting manner includes the aperiodic reporting, the reporting timestamp information includes a second absolute time for reporting the first information and/or a second relative time relative to a second reference time; where
the second reference time includes at least one of the following:
time at which the measurement information is determined by the first communication device;
a p-th time unit that is after the time at which the measurement information is indicated by the third communication device, where p is a positive integer;
a q-th time unit in a first reporting period and/or second reporting period, where q is a positive integer;
historical reporting time for reporting first information;
receiving time of a historical reference signal; and
transmitting time of a historical reference signal.

Optionally, in a case that the reporting manner includes the semi-periodic reporting and/or in a case that the reporting manner includes the aperiodic reporting, the reporting timestamp information may include a second absolute time corresponding to reporting of the first information.

Optionally, in a case that the reporting manner includes the semi-periodic reporting and/or in a case that the reporting manner includes the aperiodic reporting, the reporting timestamp information may include a second relative time corresponding to reporting of the first information.

Optionally, the second relative time may include a second relative time relative to a second reference time.

Optionally, the second reference information may include any one or more of the following:
time at which the measurement information is determined by the first communication device, which, for example, may be a second relative time relative to the time at which the measurement information is determined by the first communication device, or may be time after the time at which the measurement information is determined by the first communication device; or
a p-th time unit that is after the time at which the measurement information is indicated by the third communication device, where p is a positive integer; where for example, it may be a second relative time relative to the p-th time unit that is after the time at which the measurement information is indicated by the third communication device, or may be a time behind the p-th time unit that is after the time at which the measurement information is indicated by the third communication device; or
a q-th time unit in a first reporting period and/or second reporting period, where q is a positive integer, where for example, it may be a second relative time relative to the q-th time unit in the first reporting period and/or second reporting period, or may be a time after the q-th time unit in the first reporting period and/or second reporting period; or
historical reporting time for reporting first information; where for example, it may be a second relative time relative to the historical reporting time for reporting first information, or may be a time after the historical reporting time for reporting first information; or
receiving time of a historical reference signal; where for example, it may be a second relative time relative to the receiving time of the historical reference signal, or may be a time after the receiving time of the historical reference signal; or
transmitting time of a historical reference signal; where for example, it may be a second relative time relative to the transmitting time of the historical reference signal, or may be a time after the transmitting time of the historical reference signal.

Optionally, the historical reference signal may be a synchronization signal and PBCH block (Synchronization Signal and PBCH block, SSB), a CSI-RS, a sounding reference signal (Sounding Reference Signal, SRS), and the like that have been transmitted.

Optionally, a time unit of the second absolute time corresponding to reporting of the first information and/or the second relative time relative to the second reference time may include a common communication time unit such as TTI, symbol, slot, frame, subframe, radio frame, second, minute, hour, day, or month.

Optionally, the time unit may include reference signal period, prediction period, time unit, half time unit, symbol (OFDM symbol), subframe, radio frame, millisecond, second, or the like.

Optionally, that the first communication device determines measurement information required for target measurement for performance indication information includes:
determining, by the first communication device, a comparison result between performance of the target artificial intelligence model and a performance threshold; and
determining, by the first communication device, validity indication information of the target artificial intelligence model based on the comparison result.

Optionally, the first communication device may compare the performance of the target artificial intelligence model with the performance threshold to determine the comparison result.

Optionally, after determining the comparison result, the first communication device may determine the validity indication information of the target artificial intelligence model based on the comparison result. For example, if the comparison result is that the performance of the target artificial intelligence model is greater than or equal to the performance threshold, it is determined that the validity indication information of the target artificial intelligence model includes valid. For example, if the comparison result is that the performance of the target artificial intelligence model is less than the performance threshold, it is determined that the validity indication information of the target artificial intelligence model includes invalid.

Optionally, the first information includes measurement information of at least one target measurement and a respective target measurement result of at least one target measurement.

Optionally, the first information may include a respective target measurement result of at least one target measurement.

Optionally, the first information may include measurement information of at least one target measurement and a respective target measurement result of at least one target measurement.

For example, in a same report, measurement information and measurement results for a plurality of pieces of performance indication information may be reported, for example, for different models, different training times of a same model, and different measurement times for a same model.

Optionally, the method further includes:
determining, by the first communication device, a transmission resource for the first information based on resource allocation information of the third communication device; where
the transmission resource includes at least one of the following:
   time resource information;
   frequency resource information;
   antenna port information; and
   beam indication information.

Optionally, the first communication device may determine the transmission resources of the first information based on the resource allocation information of the third communication device, and complete transmission of the first information based on the transmission resource of the first information.

The transmission resource includes at least one of the following:
time resource information; or
frequency resource information; or
antenna port information; or
beam indication information.

In this embodiment, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

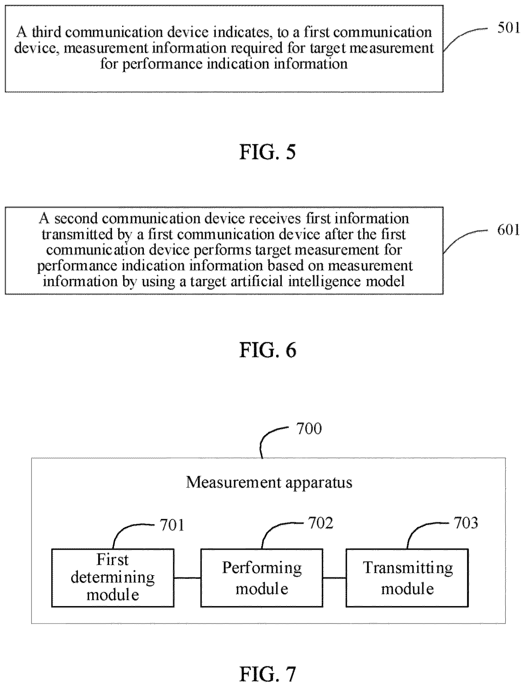

FIG. 5 is a second schematic flowchart of a measurement method according to an embodiment of this application. As shown in FIG. 5, the method includes the following step.

Step 501: A third communication device indicates, to a first communication device, measurement information required for target measurement for performance indication information.

Optionally, the third communication device may be a network-side device.

Optionally, the third communication device may be a network entity.

Optionally, the third communication device may be a network node.

Optionally, the third communication device may be a same communication device as a second communication device.

Optionally, the third communication device may be a communication device different from the second communication device.

For example, the third communication device may be a core network node, including an NWDAF, an LMF, or the like.

For example, the third communication device may be a neural network processing node.

For example, the third communication device may be an access network node, such as a base station or a newly defined neural network processing node.

For example, there may be a plurality of third communication devices, which may be a combination of the foregoing nodes.

Specifically, the third communication device may indicate the measurement information required for the target measurement for the performance indication information to the first communication device. After obtaining the measurement information, the first communication device may perform the target measurement for the performance indication information by using a target artificial intelligence model, and transmit an obtained target measurement result to the second communication device, so that the second communication device can monitor the performance of the artificial intelligence model of the first communication device.

After determining the measurement information, the first communication device may perform the target measurement based on the measurement information by using the target artificial intelligence model to obtain the target measurement result of the target measurement.

Optionally, after obtaining the target measurement result of the target measurement, the first communication device may report the target measurement result to the second communication device by using the first information.

Optionally, the target artificial intelligence model may be configured for the first communication device in advance by the second communication device, the third communication device, or other network-side devices.

Optionally, the target artificial intelligence model may be obtained through training by the first communication device itself.

In this embodiment, the measurement information may be indicated to the first communication device, so that the first communication device can obtain a target measurement result of the target measurement through target measurement by using the target artificial intelligence model based on the measurement information required for the target measurement for the performance indication information, and then report the target measurement result to the second communication device. In this way, the second communication device can obtain the measurement result output by the target artificial intelligence model on the first communication device side, and then monitor in real time performance of the artificial intelligence model of the first communication device, thereby guaranteeing the communication quality of service in the communication system.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

Optionally, the measurement information may include first indication information indicating a model type of the target artificial intelligence model.

Optionally, any information that can indicate the model type of the target artificial intelligence model may be used as the first indication information.

Optionally, the first indication information indicating the model type of the target artificial intelligence model may be directly the model type of the target artificial intelligence model.

Optionally, the first indication information indicating the model type of the target artificial intelligence model may be directly an identifier of the model type of the target artificial intelligence model.

Optionally, the measurement information may include second indication information indicating validity of the target artificial intelligence model.

Optionally, any information that can indicate validity of the target artificial intelligence model may be used as the second indication information.

Optionally, the second indication information indicating the validity of the target artificial intelligence model may be directly the validity of the target artificial intelligence model.

Optionally, the second indication information indicating the validity of the target artificial intelligence model may be directly an identifier of the validity of the target artificial intelligence model.

Optionally, the measurement information may include third indication information indicating at least one measurement object.

Optionally, any information that can indicate at least one measurement object may be used as the first indication information.

Optionally, the third indication information indicating at least one measurement object may be directly the at least one measurement object.

Optionally, the third indication information indicating at least one measurement object may be directly a respective identifier of the at least one measurement object.

Optionally, the measurement information may include fourth indication information indicating measurement timestamp information for the target measurement.

Optionally, any information that can indicate the measurement timestamp information for the target measurement may be used as the first indication information.

Optionally, the fourth indication information indicating the measurement timestamp information for the target measurement may be directly the measurement timestamp information for the target measurement.

Optionally, the fourth indication information indicating the measurement timestamp information for the target measurement may be directly an identifier of the measurement timestamp information for the target measurement.

Optionally, the measurement information may include fifth indication information indicating the performance indication information.

Optionally, any information that can indicate the performance indication information may be used as the fifth indication information.

Optionally, the fifth indication information indicating the performance indication information may be directly the performance indication information.

Optionally, the fifth indication information indicating the performance indication information may be directly an identifier of the performance indication information.

Optionally, the measurement information may further include sixth indication information indicating a measurement type of the target measurement.

Optionally, any information that can indicate the measurement type of the target measurement may be used as the sixth indication information.

Optionally, the sixth indication information indicating the measurement type of the target measurement may be directly the measurement type of the target measurement.

Optionally, the sixth indication information indicating the measurement type of the target measurement may be directly an identifier of the measurement type of the target measurement.

Optionally, the measurement information may further include seventh indication information indicating a quantization manner of the target measurement result.

Optionally, any information that can indicate the quantization manner of indicating the target measurement result may be used as seventh indication information.

Optionally, the seventh indication information indicating the quantization manner of the target measurement result may be directly the quantization manner of the target measurement result.

Optionally, the seventh indication information indicating the quantization manner of the target measurement result may be directly an identifier of the quantization manner of the target measurement result.

Optionally, the target measurement includes measurement for the at least one measurement object.

For example, the target measurement for the performance indication information may be measurement on a mean square error. In this case, the target measurement may include measurement on a measurement object, where the measurement object may include channel state information, position information, beam information, or the like. Based on a measurement result of the measurement on the measurement object, the target measurement result of the target measurement for the target performance information is obtained.

Optionally, the model type of the target artificial intelligence model may include CNN, RNN, transformer, or the like, and may also include a specific model of the target artificial intelligence model. For example, a plurality of RNN models may be deployed, and a specific model of the target artificial intelligence model may be specifically a specific RNN model.

Optionally, the measurement type includes at least one of the following:
periodic measurement, semi-periodic measurement, and aperiodic measurement.

Optionally, the measurement type may include any one or more of the following:
periodic measurement, or semi-periodic measurement, or aperiodic measurement.

Optionally, in a case that the measurement type includes the periodic measurement, the measurement timestamp information includes a first measurement period corresponding to the target measurement.

Optionally, if the measurement type of the target measurement is periodic measurement, the measurement timestamp information may include the first measurement period corresponding to the target measurement.

Optionally, the first communication device may periodically perform the target measurement based on the first measurement period, for example, a measurement window runs once every 10ms.

Optionally, in a case that the measurement type includes the semi-periodic measurement or the aperiodic measurement, the measurement timestamp information includes: a first absolute time corresponding to the target measurement and/or a first relative time relative to a first reference time corresponding to the target measurement; where
the first reference time includes at least one of the following:
time at which the measurement information is determined by the first communication device;
an n-th time unit that is after the time at which the measurement information is indicated by the third communication device, where n is a positive integer;
an m-th time unit in a first measurement period and/or second measurement period, where the first measurement period and/or the second measurement period are reporting periods corresponding to the first information transmitted by the first communication device to the second communication device, and m is a positive integer;
measurement time of historical measurement;
reporting time of measurement information and a reporting time of a measurement result of the historical measurement; and
first relative time of a historical reference signal corresponding to the historical measurement.

Optionally, in a case that the measurement type includes the semi-periodic measurement or the aperiodic measurement, the measurement timestamp information may include: a first absolute time corresponding to the target measurement.

Optionally, in a case that the measurement type includes the semi-periodic measurement or the aperiodic measurement, the measurement timestamp information may include: a first relative time corresponding to the target measurement.

Optionally, the first relative time may include a first relative time relative to a first reference time.

Optionally, the first reference information may include any one or more of the following:
time at which the measurement information is determined by the first communication device; for example, the first communication device may perform measurement in a specific time unit after receiving an indication of the measurement type; or
an n-th time unit that is after the time at which the measurement information is indicated by the third communication device, where n is a positive integer; for example, the first communication device may perform measurement in the n-th time unit following indication of the measurement type by the third communication device; or
measurement time of historical measurement; where for example, the first communication device may perform measurement at a moment after a first preset time period relative to a measurement time of a specific historical measurement; or
reporting time of measurement information and a reporting time of a measurement result of the historical measurement, where for example, the first communication device may perform measurement at a moment after a second preset time period relative to a reporting time of a measurement result of a specific historical measurement; or
first relative time of a historical reference signal corresponding to the historical measurement, where for example, the first communication device may perform measurement at a moment after a third preset time period relative to a transmission time of a specific historical reference signal.

Optionally, a time unit of the first absolute time corresponding to the target measurement and/or the first relative time relative to the first reference time corresponding to the target measurement may include a common communication time unit such as TTI, symbol, slot, frame, subframe, radio frame, second, minute, hour, day, or month.

Optionally, the time unit may include reference signal period, prediction period, time unit, half time unit, symbol (OFDM symbol), subframe, radio frame, millisecond, second, or the like.

Optionally, the measurement timestamp information includes a training period of the target artificial intelligence model.

Optionally, the measurement timestamp information further includes a training period of the target artificial intelligence model, so as to indicate the first communication device to train the target artificial intelligence model based on the training period.

The training period may include relative period and/or absolute period.

For example, when the training period includes a relative period, it may indicate training of E epochs in a case of a batch size being B.

For example, when the training period includes an absolute period, it may indicate training of S time units, or F frames, and so on.

Optionally, the performance indication information may include instantaneous performance indication information.

Optionally, the instantaneous performance indication information may be performance indication information for one or several predefined measurement time points or measurement positions.

Optionally, the performance indication information may include performance indication information obtained statistically for a plurality of continuous measurement time points or a plurality of continuous measurement positions.

Optionally, the performance indication information may include instantaneous performance indication information and performance indication information obtained statistically for a plurality of continuous measurement time points or a plurality of continuous measurement positions.

Optionally, in a case that the performance indication information includes instantaneous performance indication information, the target measurement includes instantaneous measurement for one or several predefined measurement time points or measurement positions.

Optionally, in a case that the performance indication information includes the performance indication information obtained statistically for a plurality of continuous measurement time points or a plurality of continuous measurement positions, the target measurement includes measurement and statistics for the plurality of continuous measurement time points or a plurality of continuous measurement positions.

Optionally, the first communication device may determine, based on the type of the performance indication information, that the target measurement is instantaneous measurement or statistical measurement.

Optionally, the first communication device may determine, based on a measurement criterion obtained along with the performance indication information, that the target measurement is instantaneous measurement or statistical measurement.

Optionally, the first communication device may determine, based on a measurement criterion of a preset value, that the target measurement is instantaneous measurement or statistical measurement.

Optionally, the first communication device may determine, based on a measurement criterion predefined by the protocol, that the target measurement is instantaneous measurement or statistical measurement.

Optionally, the instantaneous performance indication information includes at least one of the following:
model instantaneous error, distance performance instantaneous indicator, and communication performance instantaneous indicator; where the target measurement result includes an instantaneous result of the instantaneous measurement; and
the performance indication information obtained statistically for the plurality of continuous measurement time points or the plurality of continuous measurement positions includes at least one of the following:
   model statistical error, distance performance statistical indicator, and communication performance statistical indicator; where the target measurement result includes a statistical result of the statistical measurement.

Optionally, the instantaneous performance indication information may include the following two types of (e) and (f):
(e) First type: model instantaneous error, for example, a model-related performance indicator such as cross entropy, mean square error (MSE), or mean absolute error (MAE); and distance performance instantaneous indicator, for example, a distance performance indicator such as cosine distance.
(f) Second type: communication performance instantaneous indicator, such as instantaneous SNR, SINR, packet error rate, interruption probability, or cell/beam switching probability.

Optionally, the performance indication information obtained statistically for the plurality of continuous measurement time points or the plurality of continuous measurement positions may include the following two types of (g) and (h):
(g) Third type: model statistical error, such as cross entropy, mean square error (MSE), and mean absolute error (MAE); and distance performance statistical indicator, for example, a statistical value of a performance indicator such as cosine distance, such as mean, variance, or 90% CDF.
(h) Fourth type: communication performance statistical indicator, for example a statistical value of a communication performance indicator such as SNR, SINR, packet error rate, interruption probability, or cell/beam switching probability, for example, mean, variance, or 90% CDF.

Optionally, in a case that the performance indication information includes instantaneous performance indication information, the target measurement result includes an instantaneous result of instantaneous measurement.

Optionally, in the case that the performance indication information includes the performance indication information obtained statistically for the plurality of continuous measurement time points or the plurality of continuous measurement positions, the target measurement result includes a statistical result of the statistical measurement.

Optionally, the quantization manner includes at least one of the following:
a number of accurate digits for error quantization of the target measurement result; and
an error level of the target measurement result.

Optionally, the quantization manner may include at least one of the following:
a number of accurate digits for error quantization of the target measurement result; for example, if the measurement error is accurate to tenth digit, 10.11 is quantized to 10.1; or
an error level of the target measurement result, such as a channel estimation error being less than -30dB is one level, -30dB to -20dB is one level, and so on.

In this embodiment, the measurement information may be indicated to the first communication device, so that the first communication device can obtain a target measurement result of the target measurement through target measurement by using the target artificial intelligence model based on the measurement information required for the target measurement for the performance indication information, and then report the target measurement result to the second communication device. In this way, the second communication device can obtain the measurement result output by the target artificial intelligence model on the first communication device side, and then monitor in real time performance of the artificial intelligence model of the first communication device, thereby guaranteeing the communication quality of service in the communication system.

FIG. 6 is a third schematic flowchart of a measurement method according to an embodiment of this application. As shown in FIG. 6, the method includes the following step.

Step 601: A second communication device receives first information transmitted by a first communication device after the first communication device performs target measurement for performance indication information based on measurement information by using a target artificial intelligence model.

The first information includes a target measurement result of the target measurement.

Optionally, the second communication device may receive the first information transmitted by the first communication device after the first communication device performs target measurement for the performance indication information based on the measurement information by using the target artificial intelligence model.

Exchange of performance indication information between the second communication device (such as a network entity) and the first communication device (such as a terminal or a network node) is beneficial for the second communication device to monitor the performance of the artificial intelligence model of the first communication device in real time, thus guaranteeing the communication quality of service in the communication system.

Therefore, the first communication device can perform the target measurement for the performance indication information by using the target artificial intelligence model, and transmit an obtained target measurement result to the second communication device, so that the second communication device receives the first information and obtains the target measurement result from the first information, thereby implementing monitoring on the performance of the artificial intelligence model of the first communication device.

Optionally, before the first communication device performs the target measurement for the performance indication information, the first communication device may first determine the measurement information required for the target measurement for the performance indication information.

Optionally, after determining the measurement information, the first communication device may perform the target measurement based on the measurement information by using the target artificial intelligence model to obtain the target measurement result of the target measurement.

Optionally, after obtaining the target measurement result of the target measurement, the first communication device may report the target measurement result to the second communication device by using the first information.

Optionally, the first communication device may be a terminal deployed with an artificial intelligence model or a network node deployed with an artificial intelligence model.

Optionally, the second communication device may be a network-side device.

Optionally, the second communication device may be a network node different from the first communication device.

For example, the second communication device may be a core network node, including an NWDAF, an LMF, or the like.

For example, the second communication device may be a neural network processing node.

For example, the second communication device may be an access network node, such as a base station or a newly defined neural network processing node.

For example, there may be a plurality of second communication devices, which may be a combination of the foregoing nodes.

Optionally, the target artificial intelligence model may be configured for the first communication device in advance by the second communication device, a third communication device, or other network-side devices.

Optionally, the target artificial intelligence model may be obtained through training by the first communication device itself.

Optionally, the third communication device may be a network-side device.

Optionally, the third communication device may be a network entity.

Optionally, the third communication device may be a network node.

Optionally, the third communication device may be a same communication device as the second communication device.

Optionally, the third communication device may be a communication device different from the second communication device.

For example, the third communication device may be a core network node, including an NWDAF, an LMF, or the like.

For example, the third communication device may be a neural network processing node.

For example, the third communication device may be an access network node, such as a base station or a newly defined neural network processing node.

For example, there may be a plurality of third communication devices, which may be a combination of the foregoing nodes.

In this embodiment, by receiving the target measurement result that is reported by the first communication device through the target measurement performed by using the target artificial intelligence model based on the measurement information required for target measurement for performance indication information, the second communication device can obtain the measurement result output by the target artificial intelligence model on the first communication device side, and then monitor in real time the performance of the artificial intelligence model of the first communication device, thereby guaranteeing the communication quality of service in the communication system.

Optionally, the first information further includes the measurement information.

Specifically, the first communication device may alternatively report the measurement information to the second communication device through the first information, so that the second communication device can learn about related information used during the target measurement by using the target artificial intelligence model.

Optionally, the target measurement result and measurement information may be reported simultaneously.

Optionally, the target measurement result and measurement information may not be reported simultaneously.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

Optionally, the measurement information may include first indication information indicating a model type of the target artificial intelligence model.

Optionally, any information that can indicate the model type of the target artificial intelligence model may be used as the first indication information.

Optionally, the first indication information indicating the model type of the target artificial intelligence model may be directly the model type of the target artificial intelligence model.

Optionally, the first indication information indicating the model type of the target artificial intelligence model may be directly an identifier of the model type of the target artificial intelligence model.

Optionally, the measurement information may include second indication information indicating validity of the target artificial intelligence model.

Optionally, any information that can indicate validity of the target artificial intelligence model may be used as the second indication information.

Optionally, the second indication information indicating the validity of the target artificial intelligence model may be directly the validity of the target artificial intelligence model.

Optionally, the second indication information indicating the validity of the target artificial intelligence model may be directly an identifier of the validity of the target artificial intelligence model.

Optionally, the measurement information may include third indication information indicating at least one measurement object.

Optionally, any information that can indicate at least one measurement object may be used as the first indication information.

Optionally, the third indication information indicating at least one measurement object may be directly the at least one measurement object.

Optionally, the third indication information indicating at least one measurement object may be directly a respective identifier of the at least one measurement object.

Optionally, the measurement information may include fourth indication information indicating measurement timestamp information for the target measurement.

Optionally, any information that can indicate the measurement timestamp information for the target measurement may be used as the first indication information.

Optionally, the fourth indication information indicating the measurement timestamp information for the target measurement may be directly the measurement timestamp information for the target measurement.

Optionally, the fourth indication information indicating the measurement timestamp information for the target measurement may be directly an identifier of the measurement timestamp information for the target measurement.

Optionally, the measurement information may include fifth indication information indicating the performance indication information.

Optionally, any information that can indicate the performance indication information may be used as the fifth indication information.

Optionally, the fifth indication information indicating the performance indication information may be directly the performance indication information.

Optionally, the fifth indication information indicating the performance indication information may be directly an identifier of the performance indication information.

Optionally, the measurement information may further include sixth indication information indicating a measurement type of the target measurement.

Optionally, any information that can indicate the measurement type of the target measurement may be used as the sixth indication information.

Optionally, the sixth indication information indicating the measurement type of the target measurement may be directly the measurement type of the target measurement.

Optionally, the sixth indication information indicating the measurement type of the target measurement may be directly an identifier of the measurement type of the target measurement.

Optionally, the measurement information may further include seventh indication information indicating a quantization manner of the target measurement result.

Optionally, any information that can indicate the quantization manner of indicating the target measurement result may be used as seventh indication information.

Optionally, the seventh indication information indicating the quantization manner of the target measurement result may be directly the quantization manner of the target measurement result.

Optionally, the seventh indication information indicating the quantization manner of the target measurement result may be directly an identifier of the quantization manner of the target measurement result.

Optionally, the target measurement includes measurement for the at least one measurement object.

For example, the target measurement for the performance indication information may be measurement on a mean square error. In this case, the target measurement may include measurement on a measurement object, where the measurement object may include channel state information, position information, beam information, or the like. Based on a measurement result of the measurement on the measurement object, the target measurement result of the target measurement for the target performance information is obtained.

Optionally, the model type of the target artificial intelligence model may include CNN, RNN, transformer, or the like, and may also include a specific model of the target artificial intelligence model. For example, a plurality of RNN models may be deployed, and a specific model of the target artificial intelligence model may be specifically a specific RNN model.

Optionally, the measurement type includes at least one of the following:
periodic measurement, semi-periodic measurement, and aperiodic measurement.

Optionally, the measurement type may include any one or more of the following:
periodic measurement, or semi-periodic measurement, or aperiodic measurement.

Optionally, in a case that the measurement type includes the periodic measurement, the measurement timestamp information includes a first measurement period corresponding to the target measurement.

Optionally, if the measurement type of the target measurement is periodic measurement, the measurement timestamp information may include the first measurement period corresponding to the target measurement.

Optionally, the first communication device may periodically perform the target measurement based on the first measurement period, for example, a measurement window runs once every 10ms.

Optionally, in a case that the measurement type includes the semi-periodic measurement or the aperiodic measurement, the measurement timestamp information includes: a first absolute time corresponding to the target measurement and/or a first relative time relative to a first reference time corresponding to the target measurement; where
the first reference time includes at least one of the following:
time at which the measurement information is determined by the first communication device;
an n-th time unit that is after the time at which the measurement information is indicated by the third communication device, where n is a positive integer;
an m-th time unit in a first measurement period and/or second measurement period, where the first measurement period and/or the second measurement period are reporting periods corresponding to the first information transmitted by the first communication device to the second communication device, and m is a positive integer;
measurement time of historical measurement;
reporting time of measurement information and a reporting time of a measurement result of the historical measurement; and
first relative time of a historical reference signal corresponding to the historical measurement.

Optionally, in a case that the measurement type includes the semi-periodic measurement or the aperiodic measurement, the measurement timestamp information may include: a first absolute time corresponding to the target measurement.

Optionally, in a case that the measurement type includes the semi-periodic measurement or the aperiodic measurement, the measurement timestamp information may include: a first relative time corresponding to the target measurement.

Optionally, the first relative time may include a first relative time relative to a first reference time.

Optionally, the first reference information may include any one or more of the following:
time at which the measurement information is determined by the first communication device; for example, the first communication device may perform measurement in a specific time unit after receiving an indication of the measurement type; or
an n-th time unit that is after the time at which the measurement information is indicated by the third communication device, where n is a positive integer; for example, the first communication device may perform measurement in the n-th time unit following indication of the measurement type by the third communication device; or
measurement time of historical measurement; where for example, the first communication device may perform measurement at a moment after a first preset time period relative to a measurement time of a specific historical measurement; or
reporting time of measurement information and a reporting time of a measurement result of the historical measurement, where for example, the first communication device may perform measurement at a moment after a second preset time period relative to a reporting time of a measurement result of a specific historical measurement; or
first relative time of a historical reference signal corresponding to the historical measurement, where for example, the first communication device may perform measurement at a moment after a third preset time period relative to a transmission time of a specific historical reference signal.

Optionally, a time unit of the first absolute time corresponding to the target measurement and/or the first relative time relative to the first reference time corresponding to the target measurement may include a common communication time unit such as TTI, symbol, slot, frame, subframe, radio frame, second, minute, hour, day, or month.

Optionally, the time unit may include reference signal period, prediction period, time unit, half time unit, symbol (OFDM symbol), subframe, radio frame, millisecond, second, or the like.

Optionally, the measurement timestamp information includes a training period of the target artificial intelligence model.

Optionally, the measurement timestamp information further includes a training period of the target artificial intelligence model, so as to indicate the first communication device to train the target artificial intelligence model based on the training period.

The training period may include relative period and/or absolute period.

For example, when the training period includes a relative period, it may indicate training of E epochs in a case of a batch size being B.

For example, when the training period includes an absolute period, it may indicate training of S time units, or F frames, and so on.

Optionally, the performance indication information may include instantaneous performance indication information.

Optionally, the instantaneous performance indication information may be performance indication information for one or several predefined measurement time points or measurement positions.

Optionally, the performance indication information may include performance indication information obtained statistically for a plurality of continuous measurement time points or a plurality of continuous measurement positions.

Optionally, the performance indication information may include instantaneous performance indication information and performance indication information obtained statistically for a plurality of continuous measurement time points or a plurality of continuous measurement positions.

Optionally, in a case that the performance indication information includes instantaneous performance indication information, the target measurement includes instantaneous measurement for one or several predefined measurement time points or measurement positions.

Optionally, in a case that the performance indication information includes the performance indication information obtained statistically for a plurality of continuous measurement time points or a plurality of continuous measurement positions, the target measurement includes measurement and statistics for the plurality of continuous measurement time points or a plurality of continuous measurement positions.

Optionally, the first communication device may determine, based on the type of the performance indication information, that the target measurement is instantaneous measurement or statistical measurement.

Optionally, the first communication device may determine, based on a measurement criterion obtained along with the performance indication information, that the target measurement is instantaneous measurement or statistical measurement.

Optionally, the first communication device may determine, based on a measurement criterion of a preset value, that the target measurement is instantaneous measurement or statistical measurement.

Optionally, the first communication device may determine, based on a measurement criterion predefined by the protocol, that the target measurement is instantaneous measurement or statistical measurement.

Optionally, the instantaneous performance indication information includes at least one of the following:
model instantaneous error, distance performance instantaneous indicator, and communication performance instantaneous indicator; where the target measurement result includes an instantaneous result of the instantaneous measurement; and
the performance indication information obtained statistically for the plurality of continuous measurement time points or the plurality of continuous measurement positions includes at least one of the following:
   model statistical error, distance performance statistical indicator, and communication performance statistical indicator; where the target measurement result includes a statistical result of the statistical measurement.

Optionally, the instantaneous performance indication information may include the following two types of (e) and (f):
(e) First type: model instantaneous error, for example, a model-related performance indicator such as cross entropy, mean square error (MSE), or mean absolute error (MAE); and distance performance instantaneous indicator, for example, a distance performance indicator such as cosine distance.
(f) Second type: communication performance instantaneous indicator, such as instantaneous SNR, SINR, packet error rate, interruption probability, or cell/beam switching probability.

Optionally, the performance indication information obtained statistically for the plurality of continuous measurement time points or the plurality of continuous measurement positions may include the following two types of (g) and (h):
(g) Third type: model statistical error, such as cross entropy, mean square error (MSE), and mean absolute error (MAE); and distance performance statistical indicator, for example, a statistical value of a performance indicator such as cosine distance, such as mean, variance, or 90% CDF.
(h) Fourth type: communication performance statistical indicator, for example a statistical value of a communication performance indicator such as SNR, SINR, packet error rate, interruption probability, or cell/beam switching probability, for example, mean, variance, or 90% CDF.

Optionally, in a case that the performance indication information includes instantaneous performance indication information, the target measurement result includes an instantaneous result of instantaneous measurement.

Optionally, in the case that the performance indication information includes the performance indication information obtained statistically for the plurality of continuous measurement time points or the plurality of continuous measurement positions, the target measurement result includes a statistical result of the statistical measurement.

Optionally, the quantization manner includes at least one of the following:
a number of accurate digits for error quantization of the target measurement result; and
an error level of the target measurement result.

Optionally, the quantization manner may include at least one of the following:
a number of accurate digits for error quantization of the target measurement result; for example, if the measurement error is accurate to tenth digit, 10.11 is quantized to 10.1; or
an error level of the target measurement result, such as a channel estimation error being less than -30dB is one level, -30dB to -20dB is one level, and so on.

In this embodiment, by receiving the target measurement result that is reported by the first communication device through the target measurement performed by using the target artificial intelligence model based on the measurement information required for target measurement for performance indication information, the second communication device can obtain the measurement result output by the target artificial intelligence model on the first communication device side, and then monitor in real time the performance of the artificial intelligence model of the first communication device, thereby guaranteeing the communication quality of service in the communication system.

For the measurement method provided in the embodiments of the application, the execution subject may be a measurement apparatus. In the embodiments of the application, the measurement apparatus provided in the embodiments of the application is described by using the measurement method being executed by the measurement apparatus as an example.

FIG. 7 is a first schematic structural diagram of a measurement apparatus according to an embodiment of this application. As shown in FIG. 7, the measurement apparatus 700 includes a first determining module 701, a performing module 702, and a transmitting module 703.

The first determining module 701 is configured to determine measurement information required for target measurement for performance indication information;
the performing module 702 is configured to perform target measurement based on the measurement information by using a target artificial intelligence model, to obtain a target measurement result of the target measurement; and
the transmitting module 703 is configured to transmit first information to a second communication device; where
the first information includes the target measurement result.

Optionally, for the measurement apparatus 700, the first determining module 701 may determine the measurement information required for the target measurement for the performance indication information; the performing module 702 performs the target measurement by using the target artificial intelligence model based on the measurement information to obtain the target measurement result of the target measurement; then, the transmitting module 703 transmits the first information including the target measurement result to the second communication device.

In this embodiment, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

Optionally, the first information further includes the measurement information.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

Optionally, the first determining module 701 is specifically configured to perform at least one of the following:
determining, by the first communication device, the measurement information based on an indication from a third communication device;
determining, by the first communication device, the measurement information based on a predefinition in a protocol;
determining, by the first communication device, the measurement information based on a preset setting; and
determining, by the first communication device, the measurement information based on default measurement information.

Optionally, the first determining module 701 is specifically configured to:
determine, for the first communication device, a model type of the target artificial intelligence model; and
determine, for the first communication device, the at least one measurement object based on a first association relationship and the model type; where
the first association relationship indicates an association relationship between the at least one measurement object and the model type.

Optionally, the measurement type includes at least one of the following:
periodic measurement, semi-periodic measurement, and aperiodic measurement.

Optionally, in a case that the measurement type includes the periodic measurement, the measurement timestamp information includes a first measurement period corresponding to the target measurement.

Optionally, in a case that the measurement type includes the semi-periodic measurement or the aperiodic measurement, the measurement timestamp information includes: a first absolute time corresponding to the target measurement and/or a first relative time relative to a first reference time corresponding to the target measurement; where
the first reference time includes at least one of the following:
time at which the measurement information is determined by the first communication device;
an n-th time unit that is after the time at which the measurement information is indicated by the third communication device, where n is a positive integer;
an m-th time unit in a first measurement period and/or second measurement period, where m is a positive integer;
measurement time of historical measurement;
reporting time of measurement information and a reporting time of a measurement result of the historical measurement; and
relative time of a historical reference signal corresponding to the historical measurement.

Optionally, the measurement timestamp information includes a training period of the target artificial intelligence model.

Optionally, the performing module 702 is specifically configured to perform at least one of the following:
performing the target measurement based on a first measurement period of the periodic measurement in a case that the measurement type includes periodic measurement;
performing the target measurement based on error measurement window information of the periodic measurement in a case that the measurement type includes periodic measurement; where the error measurement window information includes a start/end time position of a window and/or duration information of the window;
performing the target measurement based on a second measurement period of the semi-periodic measurement in a case that the measurement type includes semi-periodic measurement;
performing the target measurement based on a burst measurement indication in a case that the measurement type includes semi-periodic measurement or aperiodic measurement; and
proactively performing, by the first communication device, the target measurement in a case that a reporting manner includes semi-periodic reporting or aperiodic reporting.

Optionally, the first determining module 701 is specifically configured to:
in a case that the indication from the third communication device includes periodic-measurement trigger information, determine that the measurement type includes the periodic measurement; where
the periodic-measurement trigger information includes at least one of the following:
   first measurement type indication information, where the first measurement type indication information directly indicates that the measurement type includes the periodic measurement;
   error measurement window information of the periodic measurement; and
   the first measurement period of the periodic measurement.

Optionally, the first determining module 701 is specifically configured to:
in a case that the indication from the third communication device includes semi-periodic-measurement trigger information, determine that the measurement type includes the semi-periodic measurement.

The semi-periodic-measurement trigger information includes at least one of the following:
second measurement type indication information, where the second measurement type indication information directly indicates that the measurement type includes the semi-periodic measurement;
the second measurement period of the semi-periodic measurement; and
a burst measurement indication.

Optionally, the first determining module 701 is specifically configured to:
in a case that the indication from the third communication device includes aperiodic-measurement trigger information, determine that the measurement type in the measurement information includes the aperiodic measurement.

The aperiodic-measurement trigger information includes at least one of the following:
third measurement type indication information, where the third measurement type indication information directly indicates that the measurement type includes the aperiodic measurement; and
a burst measurement indication.

Optionally, the first determining module 701 is specifically configured to perform at least one of the following:
determining that the target measurement includes instantaneous measurement, in a case that the first communication device determines that the performance indication information includes instantaneous performance indication information; and
determining that the target measurement includes statistical measurement, in a case that the first communication device determines that the performance indication information includes performance indication information obtained statistically for a plurality of continuous measurement time points or a plurality of continuous measurement positions.

Optionally, the instantaneous performance indication information includes at least one of the following:
model instantaneous error, distance performance instantaneous indicator, and communication performance instantaneous indicator; where the target measurement result includes an instantaneous result of the instantaneous measurement; and
the performance indication information obtained statistically for the plurality of continuous measurement time points or the plurality of continuous measurement positions includes at least one of the following:
   model statistical error, distance performance statistical indicator, and communication performance statistical indicator; where the target measurement result includes a statistical result of the statistical measurement.

Optionally, the quantization manner includes at least one of the following:
a number of accurate digits for error quantization of the target measurement result; and
an error level of the target measurement result.

Optionally, the transmitting module 703 is specifically configured to:
determine, for the first communication device, a reporting manner and reporting timestamp information; and
transmit, for the first communication device, the first information to the second communication device based on the reporting manner and the reporting timestamp information; where
the reporting manner includes:
   periodic reporting;
   semi-periodic reporting; and
   aperiodic reporting.

Optionally, the transmitting module 703 is specifically configured to perform at least one of the following:
in a case that the reporting manner includes periodic reporting, transmitting the first information to the second communication device based on a first reporting period of the periodic reporting;
in a case that the reporting manner includes semi-periodic reporting, transmitting the first information to the second communication device based on a second reporting period of the semi-periodic reporting;
in a case that the reporting manner includes semi-periodic reporting or aperiodic reporting, transmitting the first information to the second communication device based on a burst reporting indication; and
in a case that the reporting manner includes semi-periodic reporting or aperiodic reporting, proactively transmitting, by the first communication device, the first information to the second communication device.

Optionally, the transmitting module 703 is specifically configured to:
in a case that the target measurement result is greater than a first threshold, proactively transmit, for the first communication device, the first information to the second communication device; where
the first threshold is preset or predefined by a protocol or indicated by the third communication device.

Optionally, the transmitting module 703 is specifically configured to perform at least one of the following:
determining, for the first communication device, the reporting manner based on an indication from the third communication device;
determining, for the first communication device, the reporting manner based on a predefinition in a protocol;
determining, for the first communication device, the reporting manner based on a preset setting; and
determining, for the first communication device, the reporting manner based on default measurement information.

Optionally, the transmitting module 703 is specifically configured to:
in a case that the indication from the third communication device includes periodic-reporting trigger information, determine that the reporting manner includes the periodic reporting, where
the periodic-reporting trigger information includes at least one of the following:
   first reporting manner indication information, where the first reporting manner indication information directly indicates that the reporting manner includes the periodic reporting; and
   a first reporting period of the periodic reporting.

Optionally, the transmitting module 703 is specifically configured to:
in a case that the indication from the third communication device includes semi-periodic-reporting trigger information, determine that the reporting manner includes the semi-periodic reporting, where
the semi-periodic-reporting trigger information includes at least one of the following:
   second reporting manner indication information, where the second reporting manner indication information indicates that the reporting manner includes the semi-periodic reporting;
   a second reporting period of the semi-periodic reporting; and
   a burst reporting indication.

Optionally, the transmitting module 703 is specifically configured to:
in a case that the indication from the third communication device includes aperiodic-reporting trigger information, determine that the reporting manner includes the aperiodic reporting, where
the semi-periodic-reporting trigger information includes at least one of the following:
   third reporting manner indication information, where the third reporting manner indication information directly indicates that the reporting manner includes the aperiodic reporting; and
   a burst reporting indication.

Optionally, in a case that the reporting manner includes the semi-periodic reporting and/or in a case that the reporting manner includes the aperiodic reporting, the reporting timestamp information includes a second absolute time for reporting the first information and/or a second relative time relative to a second reference time; where
the second reference time includes at least one of the following:
time at which the measurement information is determined by the first communication device;
a p-th time unit that is after the time at which the measurement information is indicated by the third communication device, where p is a positive integer;
a q-th time unit in a first reporting period and/or second reporting period, where q is a positive integer;
historical reporting time for reporting first information;
receiving time of a historical reference signal; and
transmitting time of a historical reference signal.

Optionally, that the first communication device determines measurement information required for target measurement for performance indication information includes:
determining, by the first communication device, a comparison result between performance of the target artificial intelligence model and a performance threshold; and
determining, by the first communication device, validity indication information of the target artificial intelligence model based on the comparison result.

Optionally, the first information includes measurement information of at least one target measurement and a respective target measurement result of at least one target measurement.

Optionally, the apparatus further includes:
a second determining module, configured to determine a transmission resource for the first information based on resource allocation information of the third communication device; where
the transmission resource includes at least one of the following:
   time resource information;
   frequency resource information;
   antenna port information; and
   beam indication information.

In this embodiment, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

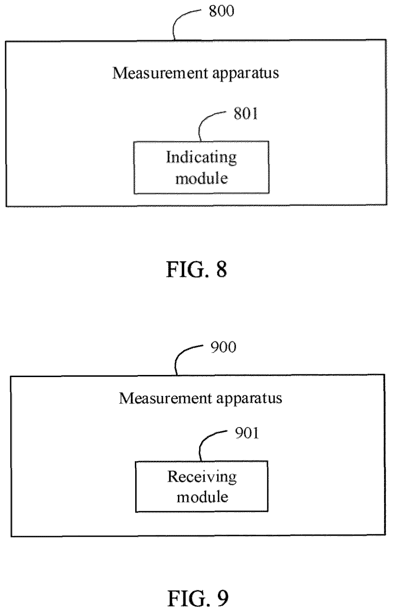

FIG. 8 is a second schematic structural diagram of a measurement apparatus according to an embodiment of this application. As shown in FIG. 8, the measurement apparatus 800 includes: an indicating module 801.

The indicating module 801 is configured to indicate, to a first communication device, measurement information required for target measurement for performance indication information.

Optionally, the measurement apparatus 800 may indicate, by using the indicating module 801, the measurement information required for target measurement of performance indication information to the first communication device.

In this embodiment, the measurement information may be indicated to the first communication device, so that the first communication device can obtain a target measurement result of the target measurement through target measurement by using the target artificial intelligence model based on the measurement information required for the target measurement for the performance indication information, and then report the target measurement result to the second communication device. In this way, the second communication device can obtain the measurement result output by the target artificial intelligence model on the first communication device side, and then monitor in real time performance of the artificial intelligence model of the first communication device, thereby guaranteeing the communication quality of service in the communication system.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

In this embodiment, the measurement information may be indicated to the first communication device, so that the first communication device can obtain a target measurement result of the target measurement through target measurement by using the target artificial intelligence model based on the measurement information required for the target measurement for the performance indication information, and then report the target measurement result to the second communication device. In this way, the second communication device can obtain the measurement result output by the target artificial intelligence model on the first communication device side, and then monitor in real time performance of the artificial intelligence model of the first communication device, thereby guaranteeing the communication quality of service in the communication system.

FIG. 9 is a third schematic structural diagram of a measurement apparatus according to an embodiment of this application. As shown in FIG. 9, the measurement apparatus 900 includes: a receiving module 901.

The receiving module 901 is configured to receive first information transmitted by a first communication device after the first communication device performs target measurement for performance indication information based on measurement information by using a target artificial intelligence model; where
the first information includes a target measurement result of the target measurement.

Optionally, the measurement apparatus 900 may receive the first information through the receiving module 901, where the first information is transmitted by the first communication device after the first communication device performs the target measurement for the performance indication information based on the measurement information by using the target artificial intelligence model.

In this embodiment, by receiving the target measurement result that is reported by the first communication device through the target measurement performed by using the target artificial intelligence model based on the measurement information required for target measurement for performance indication information, the second communication device can obtain the measurement result output by the target artificial intelligence model on the first communication device side, and then monitor in real time the performance of the artificial intelligence model of the first communication device, thereby guaranteeing the communication quality of service in the communication system.

Optionally, the first information further includes the measurement information.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

In this embodiment, by receiving the target measurement result that is reported by the first communication device through the target measurement performed by using the target artificial intelligence model based on the measurement information required for target measurement for performance indication information, the second communication device can obtain the measurement result output by the target artificial intelligence model on the first communication device side, and then monitor in real time the performance of the artificial intelligence model of the first communication device, thereby guaranteeing the communication quality of service in the communication system.

The measurement apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The measurement apparatus provided in this embodiment of this application can implement the processes implemented in the method embodiment in FIG. 4 to FIG. 6, with the same technical effects achieved. To avoid repetition, details are not described herein again.

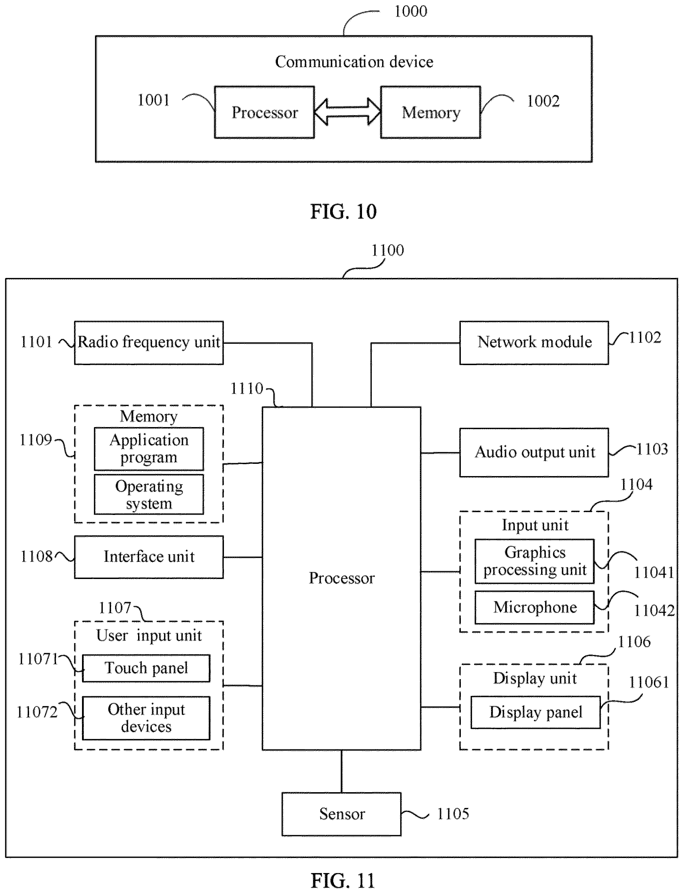

Optionally, FIG. 10 is a schematic structural diagram of a communication device according to an embodiment of this application. As shown in FIG. 10, an embodiment of this application further provides a communication device 1000, including a processor 1001, a memory 1002, and a program or instructions stored in the memory 1002 and executable on the processor 1001. For example, when the communication device 1000 is a terminal and when the program or the instructions are executed by the processor 1001, the steps of the foregoing embodiments of the measurement method are implemented, with the same technical effects achieved. When the communications device 1000 is a network-side device and when the program or the instructions are executed by the processor 1001, the steps of the foregoing embodiments of the measurement method are implemented, with the same technical effects achieved. To avoid repetition, details are not described herein again.

An embodiment of this application further provides a first communication device, including a processor and a communication interface, where the processor is configured to:
determine measurement information required for target measurement for performance indication information; and
perform target measurement based on the measurement information by using a target artificial intelligence model, to obtain a target measurement result of the target measurement; and
the communication interface is configured to:
   transmit first information to a second communication device; where
   the first information includes the target measurement result.

The first communication device embodiments correspond to the foregoing first communication device-side method embodiments, and the implementation processes and implementations of the foregoing method embodiments can be applied to the first communication device embodiments, with the same technical effects achieved. Specifically, FIG. 11 is a schematic diagram of a hardware structure of a first communication device for implementing the embodiments of this application.

The first communication device 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the first communication device 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the first communication device shown in FIG. 11 does not constitute any limitation on the first communication device. The first communication device may include more or fewer components than shown in the figure, or a combination of some components, or the components disposed differently. Details are not repeated herein.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then transmits the downlink data to the processor 1110 for processing. In addition, the radio frequency unit 1101 may transmit uplink data to the network-side device. Generally, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may include a first storage area for storing a program or instructions and a second storage area for storing data. The first storage area may store an operating system, an application program or instruction required by at least one function (for example, a sound playback function or an image playback function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in the embodiments of this application includes but is not limited to these and any other suitable types of memories.

The processor 1110 may include one or more processing units. Optionally, an application processor and a modem processor may be integrated in the processor 1110. The application processor primarily processes operations involving an operating system, user interfaces, application programs, and the like. The modem processor primarily processes radio communication signals, for example, being a baseband processor. It can be understood that the modem processor may alternatively be not integrated in the processor 1110.

In this embodiment, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

The processor 1110 is configured to:
determine measurement information required for target measurement for performance indication information;
perform target measurement based on the measurement information by using a target artificial intelligence model, to obtain a target measurement result of the target measurement; and
transmit first information to a second communication device; where
the first information includes the target measurement result.

Optionally, the first information further includes the measurement information.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

Optionally, the processor 1110 is configured to perform at least one of the following:
determining, by the first communication device, the measurement information based on an indication from a third communication device;
determining, by the first communication device, the measurement information based on a predefinition in a protocol;
determining, by the first communication device, the measurement information based on a preset setting; and
determining, by the first communication device, the measurement information based on system default measurement information.

Optionally, the processor 1110 is configured to:
determine, for the first communication device, a model type of the target artificial intelligence model; and
determine, for the first communication device, the at least one measurement object based on a first association relationship and the model type; where
the first association relationship indicates an association relationship between the at least one measurement object and the model type.

Optionally, the measurement type includes at least one of the following:
periodic measurement, semi-periodic measurement, and aperiodic measurement.

Optionally, in a case that the measurement type includes the periodic measurement, the measurement timestamp information includes a first measurement period corresponding to the target measurement.

Optionally, in a case that the measurement type includes the semi-periodic measurement or the aperiodic measurement, the measurement timestamp information includes: a first absolute time corresponding to the target measurement and/or a first relative time relative to a first reference time corresponding to the target measurement; where
the first reference time includes at least one of the following:
time at which the measurement information is determined by the first communication device;
an n-th time unit that is after the time at which the measurement information is indicated by the third communication device, where n is a positive integer;
an m-th time unit in a first measurement period and/or second measurement period, where m is a positive integer;
measurement time of historical measurement;
reporting time of measurement information and a reporting time of a measurement result of the historical measurement; and
relative time of a historical reference signal corresponding to the historical measurement.

Optionally, the measurement timestamp information includes a training period of the target artificial intelligence model.

Optionally, the processor 1110 is configured to perform at least one of the following:
performing the target measurement based on a first measurement period of the periodic measurement in a case that the measurement type includes periodic measurement;
performing the target measurement based on error measurement window information of the periodic measurement in a case that the measurement type includes periodic measurement; where the error measurement window information includes a start/end time position of a window and/or duration information of the window;
performing the target measurement based on a second measurement period of the semi-periodic measurement in a case that the measurement type includes semi-periodic measurement;
performing the target measurement based on a burst measurement indication in a case that the measurement type includes semi-periodic measurement or aperiodic measurement; and
proactively performing, by the first communication device, the target measurement in a case that a reporting manner includes semi-periodic reporting or aperiodic reporting.

Optionally, the processor 1110 is configured to:
in a case that the indication from the third communication device includes periodic-measurement trigger information, determine that the measurement type includes the periodic measurement; where
the periodic-measurement trigger information includes at least one of the following:
   first measurement type indication information, where the first measurement type indication information directly indicates that the measurement type includes the periodic measurement;
   error measurement window information of the periodic measurement; and
   the first measurement period of the periodic measurement.

Optionally, the processor 1110 is configured to:
in a case that the indication from the third communication device includes semi-periodic-measurement trigger information, determine that the measurement type includes the semi-periodic measurement.

The semi-periodic-measurement trigger information includes at least one of the following:
second measurement type indication information, where the second measurement type indication information directly indicates that the measurement type includes the semi-periodic measurement;
the second measurement period of the semi-periodic measurement; and
a burst measurement indication.

Optionally, the processor 1110 is configured to:
in a case that the indication from the third communication device includes aperiodic-measurement trigger information, determine that the measurement type in the measurement information includes the aperiodic measurement.

The aperiodic-measurement trigger information includes at least one of the following:
third measurement type indication information, where the third measurement type indication information directly indicates that the measurement type includes the aperiodic measurement; and
a burst measurement indication.

Optionally, the processor 1110 is configured to perform at least one of the following:
determining that the target measurement includes instantaneous measurement, in a case that the first communication device determines that the performance indication information includes instantaneous performance indication information; and
determining that the target measurement includes statistical measurement, in a case that the first communication device determines that the performance indication information includes performance indication information obtained statistically for a plurality of continuous measurement time points or a plurality of continuous measurement positions.

Optionally, the instantaneous performance indication information includes at least one of the following:
model instantaneous error, distance performance instantaneous indicator, and communication performance instantaneous indicator; where the target measurement result includes an instantaneous result of the instantaneous measurement; and
the performance indication information obtained statistically for the plurality of continuous measurement time points or the plurality of continuous measurement positions includes at least one of the following:
   model statistical error, distance performance statistical indicator, and communication performance statistical indicator; where the target measurement result includes a statistical result of the statistical measurement.

Optionally, the quantization manner includes at least one of the following:
a number of accurate digits for error quantization of the target measurement result; and
an error level of the target measurement result.

Optionally, the processor 1110 is configured to:
determine, for the first communication device, a reporting manner and reporting timestamp information; and
transmit, for the first communication device, the first information to the second communication device based on the reporting manner and the reporting timestamp information; where
the reporting manner includes:
   periodic reporting;
   semi-periodic reporting; and
   aperiodic reporting.

Optionally, the processor 1110 is configured to perform at least one of the following:
in a case that the reporting manner includes periodic reporting, transmitting the first information to the second communication device based on a first reporting period of the periodic reporting;
in a case that the reporting manner includes semi-periodic reporting, transmitting the first information to the second communication device based on a second reporting period of the semi-periodic reporting;
in a case that the reporting manner includes semi-periodic reporting or aperiodic reporting, transmitting the first information to the second communication device based on a burst reporting indication; and
in a case that the reporting manner includes semi-periodic reporting or aperiodic reporting, proactively transmitting, for the first communication device, the first information to the second communication device.

Optionally, the processor 1110 is configured to:
in a case that the target measurement result is greater than a first threshold, proactively transmit, for the first communication device, the first information to the second communication device; where
the first threshold is preset or predefined by a protocol or indicated by the third communication device.

Optionally, the processor 1110 is configured to perform at least one of the following:
determining, for the first communication device, the reporting manner based on an indication from the third communication device;
determining, for the first communication device, the reporting manner based on a predefinition in a protocol;
determining, for the first communication device, the reporting manner based on a preset setting; and
determining, for the first communication device, the reporting manner based on system default measurement information.

Optionally, the processor 1110 is configured to:
in a case that the indication from the third communication device includes periodic-reporting trigger information, determine that the reporting manner includes the periodic reporting, where
the periodic-reporting trigger information includes at least one of the following:
   first reporting manner indication information, where the first reporting manner indication information directly indicates that the reporting manner includes the periodic reporting; and
   a first reporting period of the periodic reporting.

Optionally, the processor 1110 is configured to:
in a case that the indication from the third communication device includes semi-periodic-reporting trigger information, determine that the reporting manner includes the semi-periodic reporting, where
the semi-periodic-reporting trigger information includes at least one of the following:
   second reporting manner indication information, where the second reporting manner indication information indicates that the reporting manner includes the semi-periodic reporting;
   a second reporting period of the semi-periodic reporting; and
   a burst reporting indication.

Optionally, the processor 1110 is configured to:
in a case that the indication from the third communication device includes aperiodic-reporting trigger information, determine that the reporting manner includes the aperiodic reporting, where
the semi-periodic-reporting trigger information includes at least one of the following:
   third reporting manner indication information, where the third reporting manner indication information directly indicates that the reporting manner includes the aperiodic reporting; and
   a burst reporting indication.

Optionally, in a case that the reporting manner includes the semi-periodic reporting and/or in a case that the reporting manner includes the aperiodic reporting, the reporting timestamp information includes a second absolute time for reporting the first information and/or a second relative time relative to a second reference time; where
the second reference time includes at least one of the following:
time at which the measurement information is determined by the first communication device;
a p-th time unit that is after the time at which the measurement information is indicated by the third communication device, where p is a positive integer;
a q-th time unit in a first reporting period and/or second reporting period, where q is a positive integer;
historical reporting time for reporting first information;
receiving time of a historical reference signal; and
transmitting time of a historical reference signal.

Optionally, that the first communication device determines measurement information required for target measurement for performance indication information includes:
determining, by the first communication device, a comparison result between performance of the target artificial intelligence model and a performance threshold; and
determining, by the first communication device, validity indication information of the target artificial intelligence model based on the comparison result.

Optionally, the first information includes measurement information of at least one target measurement and a respective target measurement result of at least one target measurement.

Optionally, the processor 1110 is configured to:
determine a transmission resource for the first information based on resource allocation information of the third communication device.

The transmission resource includes at least one of the following:
time resource information;
frequency resource information;
antenna port information; and
beam indication information.

In this embodiment, the target measurement may be performed by using the target artificial intelligence model based on the measurement information required for target measurement for performance indication information, and after the target measurement result of the target measurement is obtained, the target measurement result is reported to the second communication device. In this way, the second communication device can obtain the measurement result output by the target artificial intelligence model on the first communication device side, and then monitor in real time the performance of the artificial intelligence model of the first communication device, thereby guaranteeing the communication quality of service in the communication system.

An embodiment of this application further provides a third communication device, including a processor and a communication interface, where the communication interface is configured to:
indicate, to a first communication device, measurement information required for target measurement for performance indication information.

The third communication device embodiments correspond to the foregoing third communication device-side method embodiments, and the implementation processes and implementations of the foregoing method embodiments can be applied to the third communication device embodiments, with the same technical effects achieved.

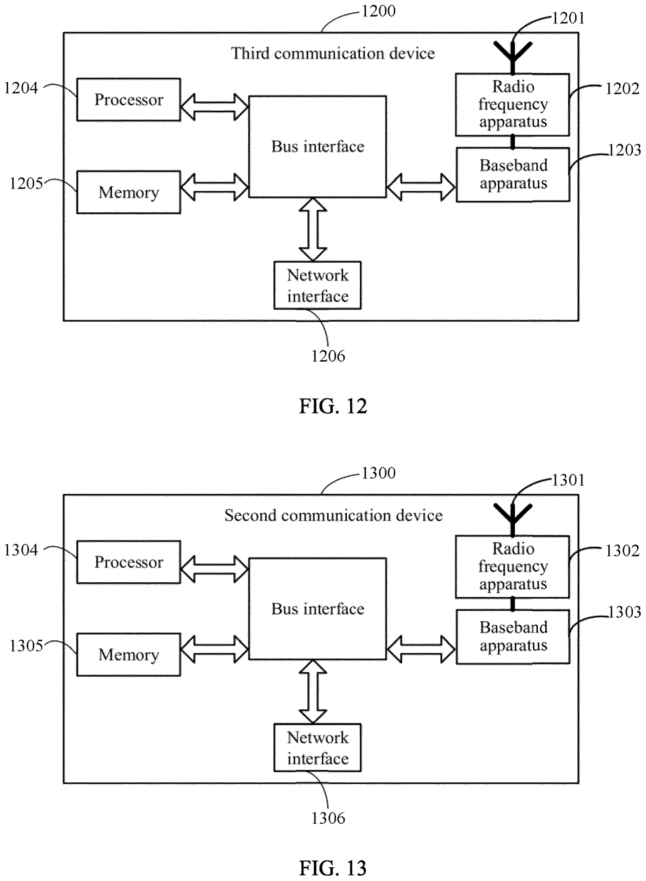

Specifically, an embodiment of this application further provides a third communication device. FIG. 12 is a schematic diagram of a hardware structure of a third communication device for implementing the embodiments of this application. As shown in FIG. 12, the third communication device 1200 includes an antenna 1201, a radio frequency apparatus 1202, a baseband apparatus 1203, a processor 1204, and a memory 1205. The antenna 1201 is connected to the radio frequency apparatus 1202. In an uplink direction, the radio frequency apparatus 1202 receives information by using the antenna 1201, and transmits the received information to the baseband apparatus 1203 for processing. In a downlink direction, the baseband apparatus 1203 processes to-be-transmitted information, and transmits the information to the radio frequency apparatus 1202; and the radio frequency apparatus 1202 processes the received information and then transmits the information out by using the antenna 1201.

The method executed by the third communication device in the foregoing embodiments can be implemented in the baseband apparatus 1203, and the baseband apparatus 1203 includes a baseband processor.

The baseband apparatus 1203 may include, for example, at least one baseband board, where a plurality of chips are disposed on the baseband board. As shown in FIG. 12, one of the chips is, for example, a baseband processor, and is connected to the memory 1205 through the bus interface, to invoke a program in the memory 1205 to perform the operations of the third communication device shown in the foregoing method embodiments.

The third communication device may further include a network interface 1206, where the interface is, for example, a common public radio interface (common public radio interface, CPRI).

Specifically, the third communication device 1200 in this embodiment of the present invention further includes: instructions or a program stored in the memory 1205 and executable on the processor 1204. The processor 1204 invokes the instructions or program in the memory 1205 to execute the method executed by the modules shown in FIG. 8, with the same technical effects achieved. To avoid repetition, details are not repeated herein.

The processor 1204 is configured to:
indicate, to a first communication device, measurement information required for target measurement for performance indication information.

In this embodiment, the measurement information may be indicated to the first communication device, so that the first communication device can obtain a target measurement result of the target measurement through target measurement by using the target artificial intelligence model based on the measurement information required for the target measurement for the performance indication information, and then report the target measurement result to the second communication device. In this way, the second communication device can obtain the measurement result output by the target artificial intelligence model on the first communication device side, and then monitor in real time performance of the artificial intelligence model of the first communication device, thereby guaranteeing the communication quality of service in the communication system.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

In this embodiment, the measurement information may be indicated to the first communication device, so that the first communication device can obtain a target measurement result of the target measurement through target measurement by using the target artificial intelligence model based on the measurement information required for the target measurement for the performance indication information, and then report the target measurement result to the second communication device. In this way, the second communication device can obtain the measurement result output by the target artificial intelligence model on the first communication device side, and then monitor in real time performance of the artificial intelligence model of the first communication device, thereby guaranteeing the communication quality of service in the communication system.

An embodiment of this application further provides a second communication device, including a processor and a communication interface, where the communication interface is configured to:
receive first information transmitted by a first communication device after the first communication device performs target measurement for performance indication information based on measurement information by using a target artificial intelligence model.

The first information includes a target measurement result of the target measurement.

The second communication device embodiments correspond to the foregoing second communication device-side method embodiments, and the implementation processes and implementations of the foregoing method embodiments can be applied to the second communication device embodiments, with the same technical effects achieved.

Specifically, an embodiment of this application further provides a second communication device. FIG. 13 is a schematic diagram of a hardware structure of a second communication device for implementing the embodiments of this application. As shown in FIG. 13, the second communication device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information by using the antenna 1301, and transmits the received information to the baseband apparatus 1303 for processing. In a downlink direction, the baseband apparatus 1303 processes to-be-transmitted information, and transmits the information to the radio frequency apparatus 1302; and the radio frequency apparatus 1302 processes the received information and then transmits the information out by using the antenna 1301.

The method executed by the second communication device in the foregoing embodiments can be implemented in the baseband apparatus 1303, and the baseband apparatus 1303 includes a baseband processor.

The baseband apparatus 1303 may include, for example, at least one baseband board, where a plurality of chips are disposed on the baseband board. As shown in FIG. 13, one of the chips is, for example, a baseband processor, and is connected to the memory 1305 through the bus interface, to invoke a program in the memory 1305 to perform the operations of the second communication device shown in the foregoing method embodiments.

The second communication device may further include a network interface 1306, where the interface is, for example, a common public radio interface (common public radio interface, CPRI).

Specifically, the second communication device 1300 in this embodiment of the present invention further includes: instructions or a program stored in the memory 1305 and executable on the processor 1304. The processor 1304 invokes the instructions or program in the memory 1305 to execute the method executed by the modules shown in FIG. 9, with the same technical effects achieved. To avoid repetition, details are not repeated herein.

The processor 1303 is configured to:
receive first information transmitted by a first communication device after the first communication device performs target measurement for performance indication information based on measurement information by using a target artificial intelligence model.

The first information includes a target measurement result of the target measurement.

In this embodiment, by receiving the target measurement result that is reported by the first communication device through the target measurement performed by using the target artificial intelligence model based on the measurement information required for target measurement for performance indication information, the second communication device can obtain the measurement result output by the target artificial intelligence model on the first communication device side, and then monitor in real time the performance of the artificial intelligence model of the first communication device, thereby guaranteeing the communication quality of service in the communication system.

Optionally, the first information further includes the measurement information.

Optionally, the measurement information includes at least one of the following:
first indication information indicating a model type of the target artificial intelligence model;
second indication information indicating validity of the target artificial intelligence model;
third indication information indicating at least one measurement object; where the target measurement includes: measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization manner for the target measurement result.

In this embodiment, by receiving the target measurement result that is reported by the first communication device through the target measurement performed by using the target artificial intelligence model based on the measurement information required for target measurement for performance indication information, the second communication device can obtain the measurement result output by the target artificial intelligence model on the first communication device side, and then monitor in real time the performance of the artificial intelligence model of the first communication device, thereby guaranteeing the communication quality of service in the communication system.

An embodiment of this application further provides a readable storage medium, where a program or instructions are stored in the readable storage medium. When the program or the instructions are executed by a processor, the processes of the foregoing embodiment of the measurement method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing measurement method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing measurement method embodiments, with the same technical effects achieved. To avoid repetition, details are not repeated herein.

An embodiment of the application further provides a measurement system, including a first communication device, a second communication device, and a third communication device, where the first communication device can be configured to execute the steps of the foregoing measurement method, the second communication device can be configured to execute the steps of the foregoing measurement method, and the third communication device can be configured to execute the steps of the foregoing measurement method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A measurement method, comprising:
determining, by a first communication device, measurement information required for target measurement for performance indication information;
performing, by the first communication device, the target measurement based on the measurement information by using a target artificial intelligence model, to obtain a target measurement result of the target measurement; and
transmitting, by the first communication device, first information to a second communication device,
wherein the first information comprises the target measurement result.

2. The measurement method according to claim 1, wherein the first information further comprises the measurement information.

3. The measurement method according to claim 1 or 2, wherein the measurement information comprises at least one of:
first indication information indicating a model type of the target artificial intelligence model;
second indication information indicating validity of the target artificial intelligence model;
third indication information indicating at least one measurement object, wherein the target measurement comprises measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization mode of the target measurement result.

4. The measurement method according to claim 3, wherein said determining, by the first communication device, the measurement information required for the target measurement for the performance indication information comprises at least one of
determining, by the first communication device, the measurement information based on an indication from a third communication device;
determining, by the first communication device, the measurement information based on a predefinition in a protocol;
determining, by the first communication device, the measurement information based on a preset setting; and
determining, by the first communication device, the measurement information based on default measurement information.

5. The measurement method according to claim 4, wherein said determining, by the first communication device, the measurement information required for the target measurement for the performance indication information comprises:
determining, by the first communication device, a model type of the target artificial intelligence model; and
determining, by the first communication device, the at least one measurement object based on a first association relationship and the model type,
wherein the first association relationship indicates an association relationship between the at least one measurement object and the model type.

6. The measurement method according to claim 3 or 4, wherein the measurement type comprises at least one of
periodic measurement, semi-periodic measurement, and aperiodic measurement.

7. The measurement method according to claim 6, wherein in a case that the measurement type comprises the periodic measurement, the measurement timestamp information comprises a first measurement period corresponding to the target measurement.

8. The measurement method according to claim 6, wherein in a case that the measurement type comprises the semi-periodic measurement or the aperiodic measurement, the measurement timestamp information comprises first absolute time corresponding to the target measurement and/or first relative time relative to first reference time corresponding to the target measurement; wherein
the first reference time comprises at least one of:
time at which the measurement information is determined by the first communication device;
an n-th time unit after time at which the measurement information is indicated by the third communication device, where n is a positive integer;
an m-th time unit in a first measurement period and/or a second measurement period, where m is a positive integer;
measurement time of historical measurement;
reporting time of measurement information and a measurement result of the historical measurement; and
relative time of a historical reference signal corresponding to the historical measurement.

9. The measurement method according to any one of claims 6 to 8, wherein the measurement timestamp information comprises a training period of the target artificial intelligence model.

10. The measurement method according to any one of claims 6 to 8, wherein said performing, by the first communication device, the target measurement based on the measurement information by using the target artificial intelligence model comprises at least one of
performing, in a case that the measurement type comprises the periodic measurement, the target measurement based on a first measurement period of the periodic measurement;
performing, in a case that the measurement type comprises the periodic measurement, the target measurement based on error measurement window information of the periodic measurement, wherein the error measurement window information comprises start/end time positions of a window and/or duration information of the window;
performing, in a case that the measurement type comprises the semi-periodic measurement, the target measurement based on a second measurement period of the semi-periodic measurement;
performing, in a case that the measurement type comprises the semi-periodic measurement or the aperiodic measurement, the target measurement based on a burst measurement indication; and
performing, by the first communication device proactively in a case that a reporting mode comprises semi-periodic reporting or aperiodic reporting, the target measurement.

11. The measurement method according to claim 10, wherein said determining, by the first communication device, the measurement information based on the indication from the third communication device comprises:
determining, in a case that the indication from the third communication device comprises periodic measurement trigger information, that the measurement type in the measurement information comprises the periodic measurement,
wherein the periodic measurement trigger information comprises at least one of:
first measurement type indication information directly indicating that the measurement type comprises the periodic measurement;
error measurement window information of the periodic measurement; and
the first measurement period of the periodic measurement.

12. The measurement method according to claim 10, wherein said determining, by the first communication device, the measurement information based on the indication from the third communication device comprises:
determining, in a case that the indication from the third communication device comprises semi-periodic measurement trigger information, that the measurement type in the measurement information comprises the semi-periodic measurement,
wherein the semi-periodic measurement trigger information comprises at least one of:
second measurement type indication information directly indicating that the measurement type comprises the semi-periodic measurement;
the second measurement period of the semi-periodic measurement; and
a burst measurement indication.

13. The measurement method according to claim 10, wherein said determining, by the first communication device, the measurement information based on the indication from the third communication device comprises:
determining, in a case that the indication from the third communication device comprises aperiodic measurement trigger information, that the measurement type in the measurement information comprises the aperiodic measurement,
wherein the aperiodic measurement trigger information comprises at least one of
third measurement type indication information directly indicating that the measurement type comprises the aperiodic measurement; and
a burst measurement indication.

14. The measurement method according to any one of claims 3 to 13, wherein said determining, by the first communication device, the measurement information required for the target measurement for the performance indication information comprises at least one of
determining, in a case that the first communication device determines that the performance indication information comprises instantaneous performance indication information, that the target measurement in the measurement information comprises instantaneous measurement; and
determining, in a case that the first communication device determines that the performance indication information comprises performance indication information obtained statistically for a plurality of continuous measurement time points or a plurality of continuous measurement positions, that the target measurement in the measurement information comprises statistical measurement.

15. The measurement method according to claim 14, wherein the instantaneous performance indication information comprises at least one of
model instantaneous error, distance performance instantaneous indicator, and communication performance instantaneous indicator, wherein the target measurement result comprises an instantaneous result of the instantaneous measurement; and
the performance indication information obtained statistically for the plurality of continuous measurement time points or the plurality of continuous measurement positions comprises at least one of
model statistical error, distance performance statistical indicator, and communication performance statistical indicator, wherein the target measurement result comprises a statistical result of the statistical measurement.

16. The measurement method according to any one of claims 3 to 15, wherein the quantization mode comprises at least one of
a number of accurate digits for error quantization of the target measurement result; and
an error level of the target measurement result.

17. The measurement method according to any one of claims 2 to 16, wherein said transmitting, by the first communication device, the first information to the second communication device comprises:
determining, by the first communication device, a reporting mode and reporting timestamp information; and
transmitting, by the first communication device, the first information to the second communication device based on the reporting mode and the reporting timestamp information; wherein
the reporting mode comprises:
periodic reporting;
semi-periodic reporting; and
aperiodic reporting.

18. The measurement method according to claim 17, wherein said transmitting, by the first communication device, the first information to the second communication device based on the reporting mode and the reporting timestamp information comprises at least one of
transmitting, in a case that the reporting mode comprises the periodic reporting, the first information to the second communication device based on a first reporting period of the periodic reporting;
transmitting, in a case that the reporting mode comprises the semi-periodic reporting, the first information to the second communication device based on a second reporting period of the semi-periodic reporting;
transmitting, in a case that the reporting mode comprises the semi-periodic reporting or the aperiodic reporting, the first information to the second communication device based on a burst reporting indication; and
transmitting, by the first communication device in a case that the reporting mode comprises the semi-periodic reporting or the aperiodic reporting, the first information to the second communication device proactively.

19. The measurement method according to claim 18, wherein said transmitting, by the first communication device, the first information to the second communication device proactively comprises:
transmitting, by the first communication device in a case that the target measurement result is greater than a first threshold, the first information to the second communication device proactively,
wherein the first threshold is preset or predefined in a protocol or indicated by the third communication device.

20. The measurement method according to any one of claims 17 to 19, wherein said determining, by the first communication device, the reporting mode comprises at least one of
determining, by the first communication device, the reporting mode based on an indication from the third communication device;
determining, by the first communication device, the reporting mode based on a predefinition in a protocol;
determining, by the first communication device, the reporting mode based on a preset setting; and
determining, by the first communication device, the reporting mode based on system default measurement information.

21. The measurement method according to claim 20, wherein said determining, by the first communication device, the reporting mode based on the indication from the third communication device comprises:
determining, in a case that the indication from the third communication device comprises periodic reporting trigger information, that the reporting mode comprises the periodic reporting,
wherein the periodic reporting trigger information comprises at least one of
first reporting mode indication information directly indicating that the reporting mode comprises the periodic reporting; and
a first reporting period of the periodic reporting.

22. The measurement method according to claim 20, wherein said determining, by the first communication device, the reporting mode based on the indication from the third communication device comprises:
determining, in a case that the indication from the third communication device comprises semi-periodic reporting trigger information, that the reporting mode comprises the semi-periodic reporting,
wherein the semi-periodic reporting trigger information comprises at least one of
second reporting mode indication information indicating that the reporting mode comprises the semi-periodic reporting;
a second reporting period of the semi-periodic reporting; and
a burst reporting indication.

23. The measurement method according to claim 20, wherein said determining, by the first communication device, the reporting mode based on the indication from the third communication device comprises:
determining, in a case that the indication from the third communication device comprises aperiodic reporting trigger information, that the reporting mode comprises the aperiodic reporting,
wherein the semi-periodic-reporting trigger information comprises at least one of
third reporting mode indication information directly indicating that the reporting mode comprises the aperiodic reporting; and
a burst reporting indication.

24. The measurement method according to any one of claims 17 to 23, wherein in a case that the reporting mode comprises the semi-periodic reporting and/or in a case that the reporting mode comprises the aperiodic reporting, the reporting timestamp information comprises second absolute time for reporting the first information and/or second relative time relative to a second reference time,
wherein the second reference time comprises at least one of:
time at which the measurement information is determined by the first communication device;
a p-th time unit after time at which the measurement information is indicated by the third communication device, where p is a positive integer;
a q-th time unit in a first reporting period and/or a second reporting period, where q is a positive integer;
historical reporting time for reporting the first information;
receiving time of a historical reference signal; and
transmitting time of a historical reference signal.

25. The measurement method according to any one of claims 3 to 24, wherein said determining, by the first communication device, the measurement information required for the target measurement for the performance indication information comprises:
determining, by the first communication device, a comparison result between performance of the target artificial intelligence model and a performance threshold; and
determining, by the first communication device, validity indication information of the target artificial intelligence model based on the comparison result.

26. The measurement method according to any one of claims 2 to 25, wherein the first information comprises measurement information of at least one target measurement and a respective target measurement result of the at least one target measurement.

27. The measurement method according to any one of claims 1 to 26, further comprising:
determining, by the first communication device, a transmission resource for the first information based on resource allocation information of the third communication device,
wherein the transmission resource comprises at least one of time resource information;
frequency resource information;
antenna port information; and
beam indication information.

28. A measurement method, comprising:
indicating, by a third communication device to a first communication device, measurement information required for target measurement for performance indication information.

29. The measurement method according to claim 28, wherein the measurement information comprises at least one of
first indication information indicating a model type of a target artificial intelligence model;
second indication information indicating validity of the target artificial intelligence model;
third indication information indicating at least one measurement object, wherein the target measurement comprises measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization mode for the target measurement result.

30. A measurement method, comprising:
receiving, by a second communication device, first information transmitted by a first communication device after the first communication device performs target measurement for performance indication information based on measurement information by using a target artificial intelligence model,
wherein the first information comprises a target measurement result of the target measurement.

31. The measurement method according to claim 30, wherein the first information further comprises the measurement information.

32. The measurement method according to claim 30 or 31, wherein the measurement information comprises at least one of:
first indication information indicating a model type of the target artificial intelligence model;
second indication information indicating validity of the target artificial intelligence model;
third indication information indicating at least one measurement object, wherein the target measurement comprises measurement for the at least one measurement object;
fourth indication information indicating measurement timestamp information for the target measurement;
fifth indication information indicating the performance indication information;
sixth indication information indicating a measurement type of the target measurement; and
seventh indication information indicating a quantization mode for the target measurement result.

33. A measurement apparatus, comprising:
a first determining module configured to determine measurement information required for target measurement for performance indication information;
a performing module configured to perform target measurement based on the measurement information by using a target artificial intelligence model, to obtain a target measurement result of the target measurement; and
a transmitting module configured to transmit first information to a second communication device,
wherein the first information comprises the target measurement result.

34. A measurement apparatus, comprising:
an indicating module configured to indicate, to a first communication device, measurement information required for target measurement for performance indication information.

35. A measurement apparatus, comprising:
a receiving module configured to receive first information transmitted by a first communication device after the first communication device performs target measurement for performance indication information based on measurement information by using a target artificial intelligence model,
wherein the first information comprises a target measurement result of the target measurement.

36. A first communication device, comprising a processor and a memory storing a program or instructions executable on the processor, wherein the program or the instructions, when executed by the processor, perform the steps of the measurement method according to any one of claims 1 to 27.

37. A third communication device, comprising a processor and a memory storing a program or instructions executable on the processor, wherein the program or the instructions, when executed by the processor, perform the steps of the measurement method according to claim 28 or 29.

38. A second communication device, comprising a processor and a memory storing a program or instructions executable on the processor, wherein the program or the instructions, when executed by the processor, perform the steps of the measurement method according to any one of claims 30 to 32.

39. A readable storage medium, having a program or instructions stored thereon, wherein the program or instructions, when executed by a processor, perform the steps of the measurement method according to any one of claims 1 to 27, or perform the steps of the measurement method according to claim 28 or 29, or perform the steps of the measurement method according to any one of claims 30 to 32.
